# EUROPEAN PATENT SPECIFICATION

(11) **EP 3 890 046 B1**
(45) Date of publication and mention of the grant of the patent: **25.06.2025**
(21) Application number: 18941761.1
(22) Date of filing: 26.11.2018
(51) Int. Cl.: H01M 50/103, H01M 50/15, H01M 50/176, H01M 50/342, H01M 50/533, H01M 50/55, H01M 50/553, H01M 50/147

(54) **LID ASSEMBLY, BATTERY, AND BATTERY PACK**
DECKELANORDNUNG, BATTERIE UND BATTERIEPACK
ENSEMBLE COUVERCLE, BATTERIE ET BLOC-BATTERIE

(43) Date of publication of application: 06.10.2021
(73) Proprietor: KABUSHIKI KAISHA TOSHIBA, Minato-ku Tokyo 105-0023 (JP)
(72) Inventor: SHINODA, Tatsuya, Minato-ku, Tokyo 105-0023 (JP); NEGISHI, Nobuyasu, Minato-ku, Tokyo 105-0023 (JP); YAMAGISHI, Genki, Minato-ku, Tokyo 105-0023 (JP)
(74) Representative: AWA Sweden AB
(86) International application number: PCT/JP2018/043434
(87) International publication number: WO 2020/110178

(56) References cited:
- EP-A1- 3 300 138
- WO-A1-2016/088506
- JP-A- 2006 147 422
- JP-A- 2012 054 236
- JP-A- 2013 025 882
- JP-A- 2014 032 967
- JP-A- 2014 107 147

## Description

### FIELD

Embodiments of the present invention relate to a lid assembly, a battery and a battery pack.

### BACKGROUND

As an example, a battery is formed by assembling components such as a lid assembly, an outer case and an electrode group which are distributed individually. In order to obtain an electric power source having a larger capacity, a battery pack (battery module) has been developed in which a plurality of batteries are connected.

The capacity of the battery is preferably as large as possible. On the other hand, the size of the battery itself (height, width, and thickness in the case of a substantially rectangular parallelepiped shape) is preferably as small as possible.

For example, the internal space of the battery is formed to be as small as possible by appropriately arranging various components in the battery. A gas may be generated inside the battery due to repeated use or aging deterioration, or the like. When the internal pressure of the battery reaches a predetermined pressure due to the generation of a gas, it is sometimes required to vent the gas from a valve disposed in the battery. Thus, the battery is required to secure a gas flow channel from a gas generation source to the valve through an internal space formed as small as possible.

EP 3 300 138 A1 relates to a rectangular secondary battery having a gas discharge valve.

### CITATION LIST

### PATENT LITERATURE

PATENT LITERATURE 1: Jpn. Pat. Appln. KOKAI Publication No. 2004-95357
PATENT LITERATURE 2: Jpn. Pat. Appln. KOKAI Publication No. 2012-182025

### SUMMARY

### TECHNICAL PROBLEM

An object of the present invention is to provide a lid assembly that can contribute to secure a gas flow channel to a valve in a battery, a battery including the lid assembly, and a battery pack including the battery.

### SOLUTION TO PROBLEM

According to an embodiment, a lid assembly includes a plate-shaped lid, a pair of terminals, a pair of leads, an insulating member, and a valve. The lid is attached to an opening of an outer case housing an electrode group. The pair of terminals each having conductivity are separated from each other in an electrically insulated state, and are disposed on the lid. The pair of leads each having conductivity are separated from each other in an electrically insulated state. One of the pair of leads is electrically connected to one of the pair of terminals on a base portion thereof, and electrically connected to one current-collecting tab of the electrode group on a leg portion extending from the base portion. Another of the pair of leads is electrically connected to another of the pair of terminals on a base portion thereof and electrically connected to another current-collecting tab of the electrode group on a leg portion extending from the base portion. The insulating member includes a plurality of opposing faces positioned on a side opposite to the lid, a pair of support face groups, and an intermediate region provided with an opening facing the lid. The plurality of opposing faces are facing the electrode group and provided between the base portions of the pair of leads. The pair of support face groups are protruding toward a side opposite to the lid with respect to the plurality of opposing faces and supporting the electrode group. The intermediate region is continuous with at least a part of the plurality of opposing faces, and provided between the pair of support face groups. The valve is provided to the lid between the pair of terminals, and is adjacent to the opening of the intermediate region of the insulating member. The valve is configured to open toward a side on which the pair of terminals are disposed in response to a pressure on a side on which the pair of leads and the insulating member are disposed with respect to the lid reaching a predetermined pressure. A maximum possible opening area with which the valve is configured to open is equal to or smaller than an area of the plurality of opposing faces.

In addition, according to an embodiment, there is provided a battery including: an outer case including an opening and a bottom wall; an electrode group including a pair of current-collecting tabs and housed in the outer case through the opening; and the lid assembly according to the embodiment, fixed to the opening of the outer case in a state that the lid and the pair of terminals are exposed to an outside, where the leg portions of the pair of leads are electrically connected to the pair of current-collecting tabs, respectively, and the pair of support face groups support the electrode group with the bottom wall.

Further, according to an embodiment, there is provided a battery pack including the battery according to the embodiment.

### BRIEF DESCRIPTION OF THE DRAWINGS

FIG. 1A is a schematic perspective view of a back face side of a lid assembly according to a first embodiment.
FIG. 1B is a schematic exploded perspective view of the lid assembly shown in FIG. 1A.
FIG. 2A is a schematic perspective view of a front face side of the lid assembly, which is opposite to the side of the lid assembly shown in FIG. 1A.
FIG. 2B is a schematic exploded perspective view of the lid assembly shown in FIG. 2A.
FIG. 3A is a schematic plan view of the back face side of the lid assembly shown in FIG. 1A.
FIG. 3B is a schematic plan view of a part of a second face (back face side) of an insulating member of the lid assembly shown in FIG. 1B.
FIG. 4 is a schematic cross-sectional view taken along the IV-IV line in FIG. 3A.
FIG. 5 is a schematic cross-sectional view of a lid assembly according to a first modification of the first embodiment and of a wall having a shape different from that of the wall shown in FIG. 4, taken along the IV-IV line in FIG. 3A.
FIG. 6 is a schematic cross-sectional view of a lid assembly according to a second modification of the first embodiment and of an adjacent face having a shape different from that of the adjacent face (opposing face) shown in FIG. 4, taken along the IV-IV line in FIG. 3A.
FIG. 7 is a schematic cross-sectional view of a lid assembly according to a third modification of the first embodiment and of a support face having a shape different from those of the support faces of the support face group shown in FIGS. 4 to 6.
FIG. 8 is a schematic cross-sectional view of a lid assembly according to a fourth modification of the first embodiment and of a support face having a shape different from those of the support faces of the support face group shown in FIGS. 4 to 7.
FIG. 9 is a schematic perspective view of a back face side of a lid assembly according to a fifth modification of the first embodiment.
FIG. 10A is a schematic plan view of the back face side of the lid assembly shown in FIG. 9.
FIG. 10B is a schematic plan view of a part of a second face (back face side) of an insulating member of the lid assembly shown in FIG. 9.
FIG. 11 is a schematic cross-sectional view taken along the XI-XI line in FIG. 10A.
FIG. 12 is a schematic perspective view of a back face side of a lid assembly according to a sixth modification of the first embodiment.
FIG. 13 is a schematic plan view of the back face side of the lid assembly shown in FIG. 12.
FIG. 14 is a schematic plan view of a back face side of a lid assembly according to a seventh modification of the first embodiment, showing that a valve having a size and a shape different from those of the valve shown in the FIG. 3A is provided.
FIG. 15 is a schematic perspective view of a battery according to a second embodiment.
FIG. 16 is a schematic exploded perspective view of the battery shown in FIG. 15.
FIG. 17A is a schematic perspective view of a state in which a part of the electrode group shown in FIG. 16 is unwound.
FIG. 17B is a schematic perspective view of the electrode group shown in FIG. 17A.
FIG. 18 is a schematic cross-sectional view taken along the XVIII-XVIII plane in FIG. 15.
FIG. 19 is a schematic cross-sectional view taken along the XIX-XIX plane in FIG. 15.
FIG. 20 is a schematic exploded perspective view of a battery pack according to a third embodiment.
FIG. 21 is an example of a block diagram of the battery pack shown in FIG. 20.

### DETAILED DESCRIPTION

Hereinafter, embodiments will be described with reference to the drawings.

First, a lid assembly 10 that can be distributed in manufacturing a battery 310 will be described as a first embodiment. Next, the battery 310 including the lid assembly 10 will be described as a second embodiment. Further, a battery pack 510 including one or more batteries 310 will be described as a third embodiment.

### (First Embodiment)

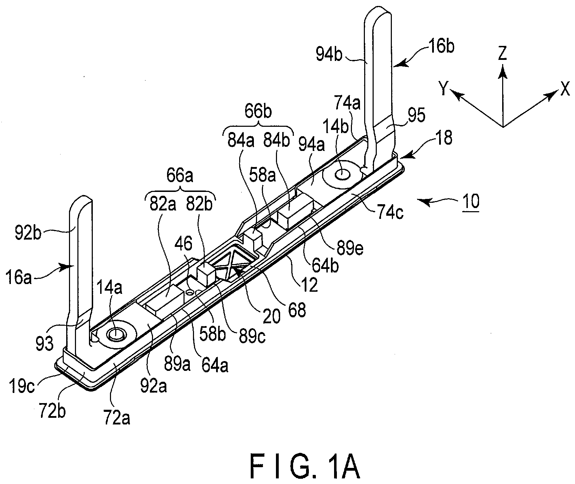

The first embodiment will be described with reference to FIGS. 1A to 4.

The lid assembly 10 according to the present embodiment is attached to an opening of an outer can (outer case) of a primary battery or a secondary battery, and is used as a lid member that closes the opening of the outer can in an airtight and liquid-tight manner.

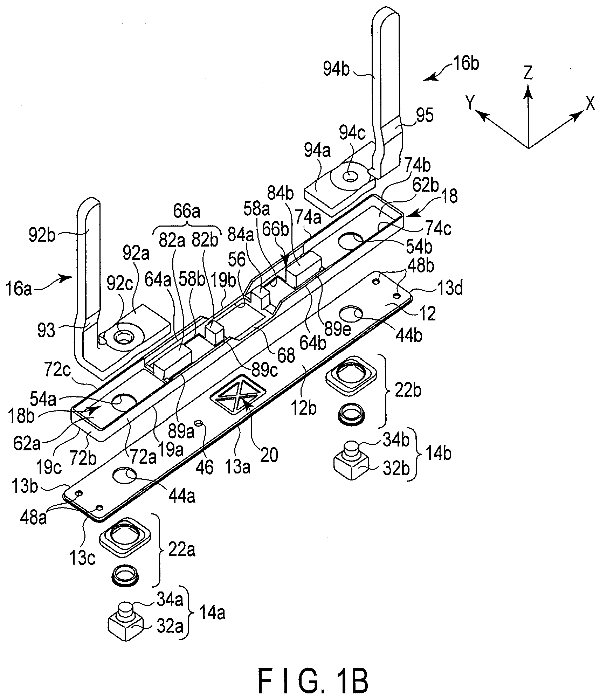

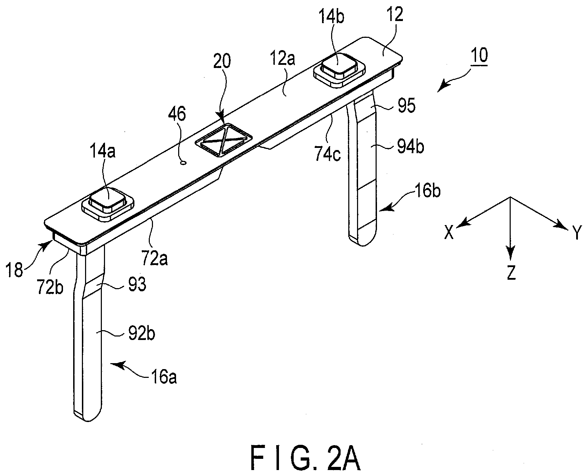

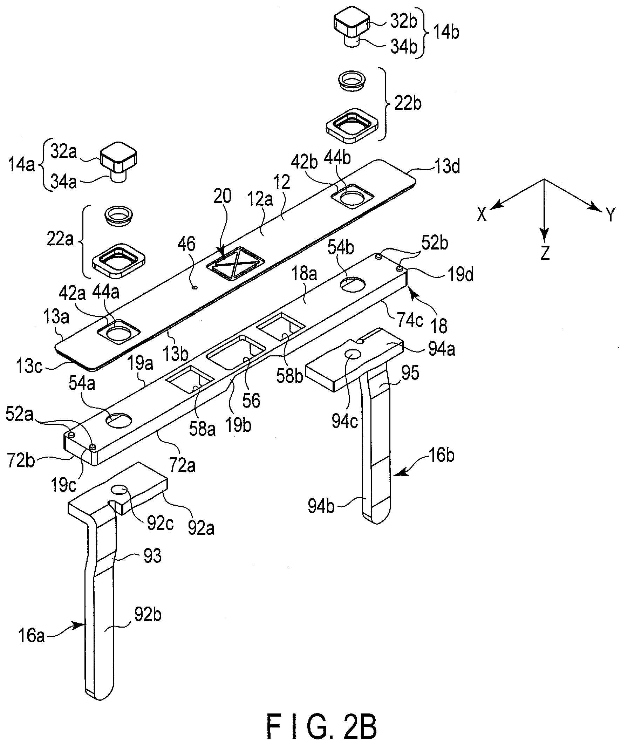

FIGS. 1A and 1B show the back face side of the lid assembly 10, and FIGS. 2A and 2B show the front face side of the lid assembly 10.

The lid assembly 10 includes a lid 12, a pair of terminals 14a and 14b, a pair of leads 16a and 16b, an insulating member 18 having an electrical insulation property, and a valve (safety valve) 20 provided to the lid 12. Gaskets 22a and 22b having an electrical insulation property are disposed between the lid 12 and the pair of terminals 14a and 14b, respectively.

For this purpose, although the lid assembly 10 includes the gaskets 22a and 22b in the present embodiment, the gaskets 22a and 22b may be attached to the terminals 14a and 14b in advance. When a resin material having an electrical insulation property is applied to predetermined positions of the terminals 14a and 14b, for example, the gaskets 22a and 22b may be unnecessary.

When the positive electrode terminal 14a and the negative electrode terminal 14b are arranged on the lid 12, a hermetic seal using glass may be used instead of using the insulating gaskets 22a and 22b.

For the lid assembly 10 according to the present embodiment, an XYZ orthogonal coordinate system is adopted, as shown in FIGS. 1A to 3A.

As shown in FIGS. 1B and 2B, the lid 12 has a substantially rectangular plate shape and has a front face 12a and a back face 12b in the present embodiment. The front face 12a is formed as a front face of the lid assembly 10. The lid 12 has a flat plate shape or a substantially flat plate shape parallel to the XY plane and has an appropriate thickness in the Z-axis direction. The lid 12 is made of a metal such as aluminum, an aluminum alloy, iron, or stainless steel. The thickness of the lid 12 varies depending on the material of the lid 12; however, it is preferably, for example, 0.3 mm or more and 2 mm or less.

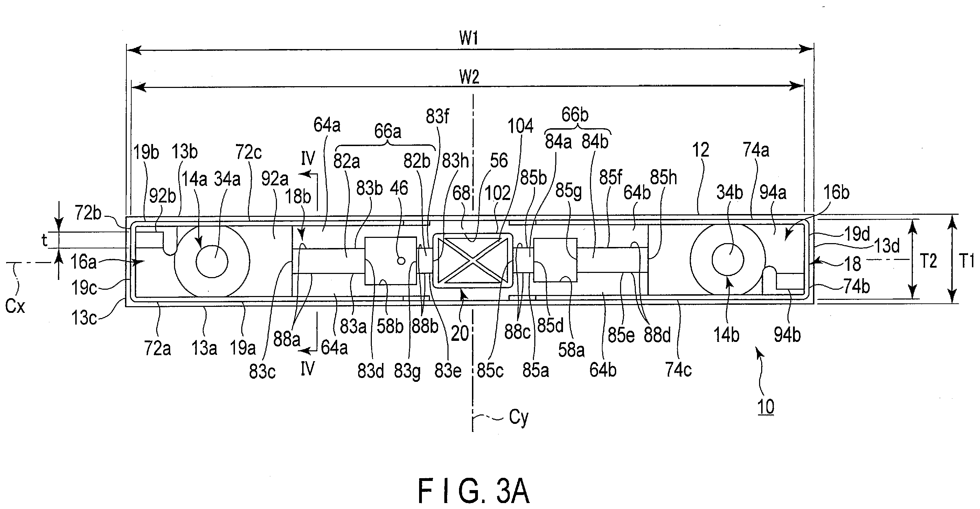

As shown in FIG. 3A, the lid 12 includes, for example, a pair of long-side edges 13a and 13b parallel to the X-axis and a pair of short-side edges 13c and 13d parallel to the Y-axis. The distance between the pair of long-side edges 13a and 13b, that is, the width T1 of the lid 12 (the thickness of the battery 310) is smaller than the distance W1 between the pair of short-side edges 13c and 13d (the width of the battery 310). In other words, the length W1 of the pair of long-side edges 13a and 13b (the length of the lid 12) is larger than the length T1 of the pair of short-side edges 13c and 13d.

The relationship between the length W1 of the long side of the lid 12 (the distance between the pair of short-side edges 13c and 13d) and the length T1 of the short side of the lid 12 (the distance between the pair of long-side edges 13a and 13b) is preferably, for example, 7 ≤ W1/T1 ≤ 9. As an example, T1 = 14 mm and W1 = 112 mm. In this case, W1/T1 = 8.

The measurement of the distance T1 between the pair of long-side edges 13a and 13b shown in the FIG. 3A is obtained by measuring the length in the Y-axis direction from the long-side edge 13a to the other long-side edge 13b at the central positions of the respective long-side edges in the X-axis direction. Likewise, the measurement of the distance W1 between the pair of short-side edges 13c and 13d is obtained by measuring the length in the X-axis direction from the short-side edge 13c to the other short-side edge 13d at the central positions of the respective short-side edges in the Y-axis direction. For example, Quick Mini PK-1012CPS manufactured by Mitsutoyo Corporation, or a device having a function equivalent thereto, is used for the measurement.

A resin material selected from polyester (PET), polyimide, polyphenylene sulfide (PPS), and polypropylene, for example, can be used for the insulating member 18. As shown in FIG. 3A, the insulating member 18 has a substantially rectangular shape in the present embodiment. The insulating member 18 includes, for example, a pair of long sides (long-side edges) 19a and 19b parallel to the X-axis and a pair of short sides (short-side edges) 19c and 19d parallel to the Y-axis. The distance between the pair of long sides 19a and 19b, that is, the width T2 of the insulating member 18 is smaller than the distance W2 between the pair of short sides 19c and 19d. In other words, the length W2 of the pair of long sides 19a and 19b (the length of the insulating member 18) is larger than the length T2 of the pair of short sides 19c and 19d.

The distance T1 between the pair of long-side edges 13a and 13b of the lid 12 is larger than the distance T2 between the pair of long sides 19a and 19b of the insulating member 18. The distance W1 between the pair of short-side edges 13c and 13d of the lid 12 is larger than the distance W2 between the pair of short sides 19c and 19d. Thus, the outer edge of the insulating member 18 may be disposed inside the outer edge of the lid 12 in the XY plane.

In particular, the relationship between the length W2 of the long side of the insulating member 18 (the distance between the pair of short sides 19c and 19d) and the length T2 of the short side of the insulating member 18 (the distance between the pair of long sides 19a and 19b) is preferably, for example, 7 ≤ W2/T2 ≤ 13. For example, W2 is set to 112 mm, and T2 is set to 14 mm.

The pair of terminals 14a and 14b are formed of a conductive material. The material of the terminal 14a and the material of the terminal 14b vary depending on the type of the electrolyte of the battery, and the like. When the lid assembly 10 is used as a part of a lithium ion secondary battery, aluminum or an aluminum alloy is used for the positive electrode terminal 14a. A metal such as copper, nickel, or nickel-plated iron is used for the negative electrode terminal 14b. Aluminum or an aluminum alloy may also be used for the negative electrode terminal 14b.

One of the terminals 14a and 14b is used as the positive electrode terminal 14a, and the other of the terminals 14a and 14b is used as the negative electrode terminal 14b. The positive electrode terminal 14a and the negative electrode terminal 14b are formed in a pin shape with head portions 32a and 32b and columnar portions 34a and 34b, respectively. The head portions 32a and 32b have a rectangular parallelepiped shape in the examples shown in FIGS. 1B and 2B, but may have various shapes such as a cylindrical shape. The columnar portions 34a and 34b are cylindrical in the examples shown in FIGS. 1B and 2B, but may have various shapes such as a prismatic shape.

As shown in FIG. 2B, a pair of concave portions 42a and 42b are formed in the front face 12a of the lid 12. The concave portions 42a and 42b are substantially rectangular. A through hole 44a is formed in the concave portion 42a, and a through hole 44b is formed in the other concave portion 42b. The concave portions 42a and 42b may have the same shape or different shapes. A ring-shaped insulating gasket 22a having an electrical insulating property and having an opening at the center is disposed in the concave portion 42a. A ring-shaped insulating gasket 22b having an electrical insulating property and having an opening at the center is disposed in the concave portion 42b.

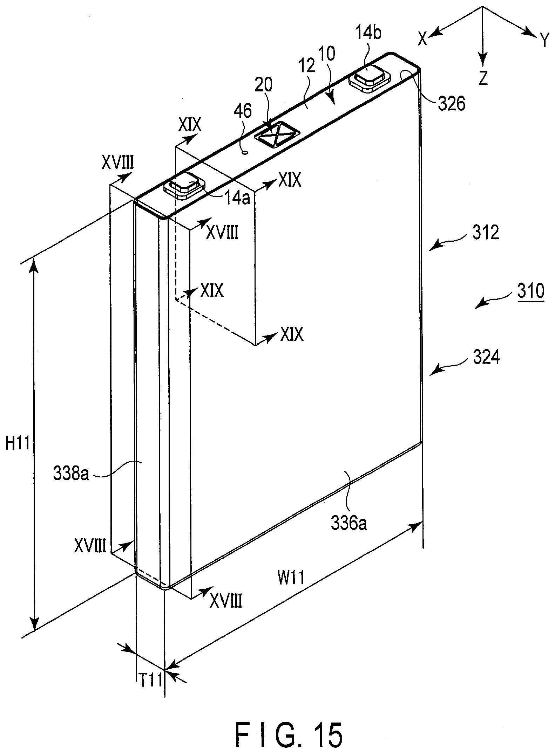

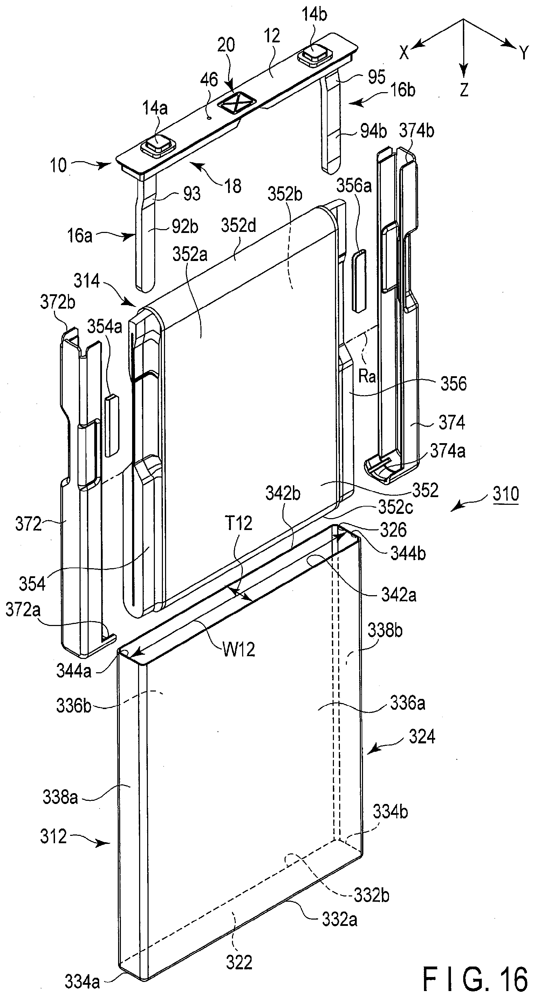

A first small hole 46 through which a fluid such as a liquid can be taken in and out from the front face 12a side to the side facing the back face 12b is formed in the lid 12. When assembling the battery 310 of the second embodiment shown in FIG. 16, which will be described later, the first small hole 46 allows a fluid to be taken in and out from the front face 12a side to the side facing the back face 12b. As shown in FIG. 15, when the battery 310 is assembled and formed, the first small hole 46 is closed by welding, for example, and a communication between the front face 12a and the back face 12b of the lid 12 is prevented. The pressure resistance performance by the welding until the back face 12b and the front face 12a of the lid 12 communicate with each other is set larger than the operating pressure (e.g., 1.0 MPa) of the valve 20.

The head portion 32a of the positive electrode terminal 14a is arranged in the concave portion 42a of the lid 12 with the insulating gasket 22a having an electrical insulation property interposed therebetween. The head portion 32b of the negative electrode terminal 14b is arranged in the concave portion 42b of the lid 12 with the insulating gasket 22b having an electrical insulation property interposed therebetween. The head portions 32a and 32b of the terminals 14a and 14b protrude from the front face 12a of the lid 12. The columnar portions 34a and 34b of the terminals 14a and 14b protrude from the back face 12b of the lid 12. On this occasion, the positive electrode terminal 14a and the negative electrode terminal 14b are prevented from electrically contacting the lid 12 by the gaskets 22a and 22b, respectively. Thus, the positive electrode terminal 14a and the negative electrode terminal 14b are prevented from being electrically connected to each other.

As shown in FIGS. 1B and 2B, the insulating member 18 includes a first face 18a in contact with or close to the back face 12b of the lid 12, and a second face 18b opposite to the first face 18a and facing an electrode group 314. The second face 18b collaborates with the leads 16a and 16b to form a part of the back face of the lid assembly 10.

Similar to the back face 12b of the lid 12, the first face 18a of the insulating member 18 is preferably flat or substantially flat and parallel to the XY plane.

For example, two pairs of concave portions 48a, 48a, 48b, and 48b are formed in the back face 12b of the lid 12.

For example, two pairs of protrusions 52a, 52a, 52b, and 52b are formed on the first face 18a of the insulating member 18. The protrusions 52a, 52a, 52b, and 52b on the first face 18a of the insulating member 18 and the concave portions 48a, 48a, 48b, and 48b in the back face 12b of the lid 12 are fitted to each other, so that the front face of the insulating member 18 may come into close contact with the back face 12b of the lid 12. Also, positional deviation between the lid 12 and the insulating member 18 is suppressed.

In the examples shown in FIGS. 1B and 2B, the number of protrusions 52a, 52a, 52b, and 52b is the same as the number of concave portions 48a, 48a, 48b, and 48b. The number of protrusions may be smaller than the number of concave portions.

Herein, an example in which the short-side edge 13c of the lid 12 and the short side 19c of the insulating member 18 are close to each other is described; however, the short-side edge 13c of the lid 12 and the short side 19d of the insulating member 18 may be close to each other.

The first face 18a of the insulating member 18 includes: a pair of through holes 54a and 54b through which the columnar portions 34a and 34b of the terminals 14a and 14b pass; an opening 56 opposing the valve 20; and second small holes 58a and 58b through which a fluid such as a liquid is taken in and out through the first small hole 46 of the lid 12. The through holes 54a and 54b, the opening 56, and the second small holes 58a and 58b penetrate the second face 18b. Here, the second small holes 58a and 58b have the same shape. The second small holes 58a and 58b may have different shapes.

The second face 18b of the insulating member 18 has appropriate irregularities.

The second face 18b of the insulating member 18 includes: a pair of receiving portions 62a and 62b; a pair of adjacent faces 64a and 64b (opposing faces to the electrode group 314) that are adjacent to the receiving portions 62a and 62b; a pair of support face groups 66a and 66b; and an intermediate region 68. The adjacent faces 64a and 64b and the pair of support face groups 66a and 66b preferably extend in the X-axis direction.

As shown in FIG. 3A, the opening 56 is formed in the intermediate region 68. The opening 56 is formed between the long sides 19a and 19b of the insulating member 18 in the intermediate region 68. The opening 56 is formed between an edge 83h of the support face 82b of the support face group 66a and an edge 85c of the support face 84a of the support face group 66b.

As shown in FIG. 1B, the receiving portion 62a is adjacent to the pair of adjacent faces 64a in the X-axis direction. The receiving portion 62a is separated from the intermediate region 68 and is continuous with the pair of adjacent faces (a plurality of opposing faces) 64a. The support face group 66a is disposed between the pair of adjacent faces 64a in the Y-axis direction. The receiving portion 62b is adjacent to the pair of adjacent faces 64b in the X-axis direction. The receiving portion 62b is separated from the intermediate region 68 and is continuous with the pair of adjacent faces (a plurality of opposing faces) 64b. The support face group 66b is disposed between the pair of adjacent faces 64b in the Y-axis direction.

As shown in FIGS. 1B and 2B, the receiving portion 62a is adjacent to the short side 19c, and the receiving portion 62b is adjacent to the short side 19d. Each of the receiving portions 62a and 62b is formed as a substantially rectangular region. The through hole 54a through which the columnar portion 34a of the terminal 14a passes is formed in the receiving portion 62a, and the through hole 54b through which the columnar portion 34b of the terminal 14b passes is formed in the receiving portion 62b. A base portion 92a (described later) of the lead 16a is received in the receiving portion 62a. The receiving portion 62a is adjacent to the adjacent face 64a and receives the base portion 92a of the lead 16a. A base portion 94a (described later) of the other lead 16b is received in the receiving portion 62b. The receiving portion 62b is adjacent to the adjacent face 64a and receives the base portion 94a of the lead 16b. There may be a level difference between the adjacent face 64a and the receiving portion 62a and/or between the adjacent face 64b and the receiving portion 62b.

As shown in FIGS. 1A and 1B, the receiving portion 62a includes, for example, three walls 72a, 72b, and 72c. The wall 72a is at a position close to the short side 19c on the long side 19a, the wall 72b is on the short side 19c, and the wall 72c is at a position close to the short side 19c on the long side 19b. The height of each of the walls 72a, 72b, and 72c in the Z-axis direction is greater than the thickness of the base portion 92a of the lead 16a. The walls 72a and 72c extend along the long sides 19a and 19b from the short side 19c to the adjacent face 64a. The base portion 92a (described later) of the lead 16a, the adjacent face 64a, and the support face group 66a (support faces 82a and 82b described later) are arranged between the walls 72a and 72c. The support faces 82a and 82b protrude relative to the edges of the walls 72a and 72c toward the side opposite to the lid 12 in the Z-axis direction.

Likewise, the receiving portion 62b includes, for example, three walls 74a, 74b and 74c. The height of each of the walls 74a, 74b and 74c in the Z-axis direction is greater than the thickness of the base portion 94a of the lead 16b. The walls 74a and 74c are preferably formed in a manner similar to the walls 72a and 72c. The walls 74a and 74c extend along the long sides 19a and 19b from the short side 19d to the adjacent face 64b. The base portion 94a (described later) of the lead 16b, the adjacent face 64b, and the support face group 66b (support faces 84a and 84b described later) are arranged between the walls 74a and 74c. The support faces 84a and 84b protrude relative to the edges of the walls 74a and 74c toward the side opposite to the lid 12 in the Z-axis direction.

When the first face 18a of the insulating member 18 is a flat face parallel to the XY plane, the thickness between the first face 18a and the receiving portions 62a and 62b is preferably smaller than the thickness between the first face 18a and the adjacent faces 64a and 64b of the insulating member 18. In this case, the receiving portions 62a and 62b are formed as sectioned regions where the base portions 92a and 94a of the leads 16a and 16b are received.

In the present embodiment, the pair of adjacent faces 64a and 64b and the pair of support face groups 66a and 66b are planes parallel to the XY plane. The pair of support face groups 66a and 66b (support faces 82a, 82b, 84a, and 84b) are preferably in the middle position between the long-side edges 13a and 13b of the lid 12 and between the long sides 19a and 19b of the insulating member 18.

As shown in FIG. 3A, the support face group 66a includes a plurality of support faces 82a and 82b. The support face group 66a includes edges 83a to 83d defining the support face 82a and edges 83e to 83h defining the other support face 82b. A substantially rectangular second small hole 58b is formed between the support faces 82a and 82b. The first small hole 46 of the lid 12 may communicate with the second small hole 58b. The second small hole 58b includes four edges 59a, 59b, 59c and 59d.

Here, each of the support faces 82a and 82b is a substantially rectangular plane. Thus, in the present embodiment, each of the edges 83a to 83d and the edges 83e to 83h is formed to be straight.

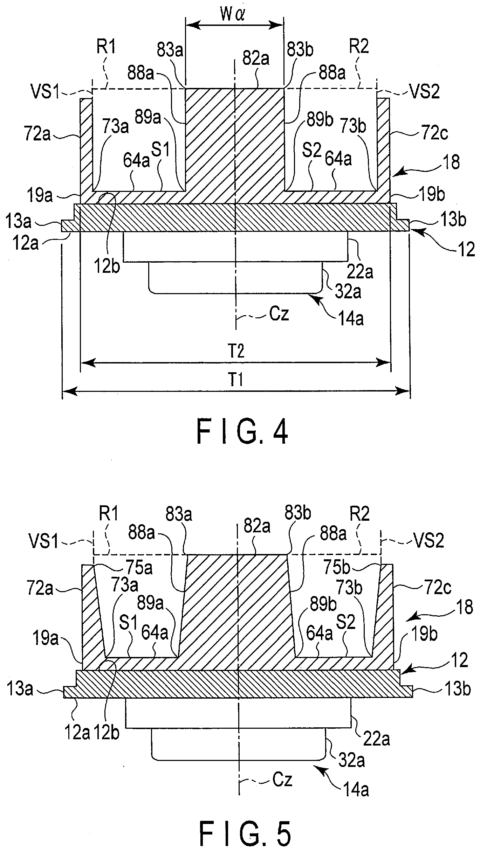

As shown in FIG. 4, the width between the edges 83a and 83b of the support face 82a of the support face group 66a is defined as Wα. The width Wα with respect to the distance T1 between the long-side edges 13a and 13b of the lid 12 is preferably, for example, 0.20 ≤ Wα/T1 ≤ 0.45. As an example, Wα is set to 3.9 mm, and T1 is set to 14 mm. In this case, Wα/T1 = 0.28.

The support faces 82a and 82b may have various shapes other than a substantially rectangular shape, such as a substantially elliptical shape. When the support face 82a has a substantially elliptical shape, the width Wα between the edges 83a and 83b may be defined as the length of the minor axis among the major axis and the minor axis of the ellipse.

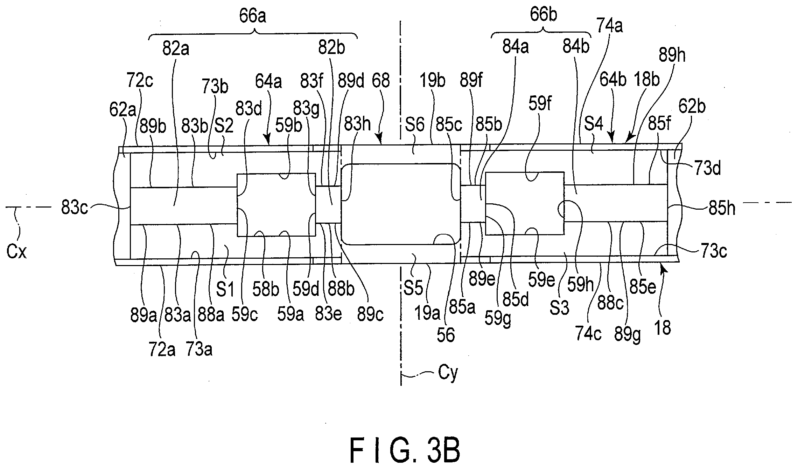

As shown in FIG. 3B, the other support face group 66b includes the plurality of support faces 84a and 84b. The support face group 66b includes edges 85a to 85d defining the support face 84a, and edges 85e to 85h defining the other support face 84b. A substantially rectangular second small hole 58a is formed between the support faces 84a and 84b.

Here, the second small holes 58a and 58b and the support face groups 66a and 66b are formed symmetrically with respect to the central axis Cx parallel to the X-axis and the central axis Cy parallel to the Y-axis, respectively. As shown in FIGS. 3A and 3B, the lid assembly 10 is preferably symmetrical with respect to the central axis Cx parallel to the X-axis and symmetrical with respect to the central axis Cy parallel to the Y-axis, excluding the pair of leads 16a and 16b. As shown in FIG. 4, the lid assembly 10 is preferably symmetrical with respect to the central axis Cz parallel to the Z-axis.

The first small hole 46 of the lid 12 may communicate with the second small hole 58a depending on the orientation of the insulating member 18 with respect to the lid 12. The second small hole 58b includes four edges 59e, 59f, 59g and 59h.

Here, each of the support faces 84a and 84b is a substantially rectangular plane. The support faces 82a, 82b, 84a, and 84b are flush with each other. In the present embodiment, each of the edges 85a, 85b, 85c, and 85d and the edges 85e, 85f, 85g, and 85h is formed to be straight.

In a manner similar to the support faces 82a and 82b, the support faces 84a and 84b may be formed not only in a substantially rectangular shape but also in various shapes.

As shown in FIG. 4, the support face group 66a is at a position where it protrudes in the Z-axis direction with respect to the adjacent face 64a, and the support face group 66b is at a position where it protrudes in the Z-axis direction with respect to the adjacent face 64b. For example, standing faces 88a and 88b along the Z-axis direction are provided between the adjacent face 64a and the support face group 66a. A boundary between the standing face 88a and the support face 82a forms the edges 83a to 83d. A boundary between the standing face 88b and the support face 82b forms the edges 83e to 83h. For example, standing faces 88c and 88d along the Z-axis direction are provided between the adjacent face 64b and the support face group 66b. A boundary between the standing face 88c and the support face 84a forms the edges 85a to 85d. A boundary between the standing face 88d and the support face 84b forms the edges 85e to 85h.

A boundary between the standing face 88a and the adjacent face 64a forms edges 89a and 89b. A boundary between the standing face 88b and the adjacent face 64a forms edges 89c and 89d.

As shown in FIGS. 3B and 4, a region between the edge 89a of the adjacent face 64a and an edge 73a of the wall 72a that forms a boundary with the adjacent face 64a, between the edge 89c of the adjacent face 64a and the edge 73a, and between the edge 59a of the second small hole 58b and the edge 73a, is defined as S1. A region between the edge 89b of the adjacent face 64a and an edge 73b of the wall 72c that forms a boundary with the adjacent face 64a, between the edge 89d of the adjacent face 64a and the edge 73b, and between the edge 59b of the second small hole 58b and the edge 73b, is defined as S2.

A boundary between the standing face 88c and the adjacent face 64b forms edge 89e and 89f. A boundary between the standing face 88d and the adjacent face 64b forms edges 89g and 89h. A region between the edge 89e of the adjacent face 64b and an edge 73c of the wall 74c that forms a boundary with the adjacent face 64b, between the edge 89g of the adjacent face 64b and the edge 73c, and between the edge 59e of the second small hole 58a and the edge 73c is defined as S3. A region between the edge 89f of the adjacent face 64b and an edge 73d of the wall 74a that forms a boundary with the adjacent face 64b, between the edge 89h of the adjacent face 64b and the edge 73d, and between the edge 59f of the second small hole 58a and the edge 73d is defined as S4.

The plurality of adjacent faces 64a and 64b of the insulating member 18 are formed to be flush with each other for simplicity of description. The protruding amount of the support face groups 66a and 66b with respect to the plurality of adjacent faces 64a and 64b is larger than the thickness of the base portions 92a and 94a (described later) of the pair of leads 16a and 16b. Thus, although the support face groups 66a and 66b may come into contact with the electrode group 314, the base portions 92a and 94a of the pair of leads 16a and 16b do not come into contact with the electrode group 314.

As shown in FIG. 3A, the support face group 66a includes the plurality of edges 83a to 83d and 83e to 83h between the base portion 92a of the lead 16a received in the receiving portion 62a and the intermediate region 68. The support face group 66b includes the plurality of edges 85a to 85d and 85e to 85h between the base portion 94a of the lead 16b received in the receiving portion 62b and the intermediate region 68.

As shown in FIG. 3B, the adjacent face 64a is formed as a region combining faces S1 and S2. The other adjacent face 64b is formed as a region combining faces S3 and S4. The intermediate region 68 also includes regions indicated by faces S5 and S6.

As shown in FIG. 4, virtual faces VS1 and VS2 are supposed to be from the edges 73a and 73b in the flat adjacent face 64a toward the side opposite to the side where the lid 12 is disposed. It is assumed that the virtual faces VS1 and VS2 are parallel to the Z-axis. A virtual planar region R1 parallel to the adjacent face 64a is defined between the virtual face VS1 and the edge 83a, and a virtual planar region R2 parallel to the adjacent face 64a is defined between the virtual face VS2 and the edge 83b. The regions R1 and R2 are parallel to the XY plane. The regions R1 and R2 are substantially congruent with the faces S1 and S2. That is, the areas of the regions R1 and R2 substantially coincide with the areas of the faces S1 and S2. When one end of the region R1 is defined to be on the virtual face VS1, the other end of the region R1 may be at any position between the edge 83a and the edge 89a. When the one end of the region R2 is defined to be on the virtual face VS2, the other end of the region R2 may be at any position between the edge 83b and the edge 89b.

As shown in FIGS. 1A and 1B, the lead 16a includes the base portion 92a and one leg portion 92b extending from the base portion 92a. The base portion 92a and the leg portion 92b are formed of a single plate having the same thickness by press working or the like. The leg portion 92b is bent with respect to the base portion 92a. The base portion 92a is formed in a substantially rectangular flat plate shape. The base portion 92a has an opening 92c in which the columnar portion 34a of the terminal 14a is disposed. The base portion 92a in a flat plate shape is preferably parallel to the XY plane.

The leg portion 92b may be in contact with a fixing member 354a of the electrode group 314 described later. The leg portion 92b extends in the Z-axis direction toward the side opposite to the lid 12. The leg portion 92b does not extend straight in the Z-axis direction from the base portion 92a, but is bent in the Y-axis direction, for example, in the region indicated by the reference numeral 93. In particular, with the base portion 92a of the lead 16a arranged in the receiving portion 62a, the leg portion 92b is bent from the wall 72c toward the wall 72a in the region indicated by the reference numeral 93. This is for the purpose of imparting to the leg portion 92b such springiness that it is certainly brought into contact with the fixing member 354a of the electrode group 314. The region indicated by the reference numeral 93 is preferably at a position close to the base portion 92a in the leg portion 92b. This is for the purpose of making the contact area between the leg portion 92b and the fixing member 354a described later as large as possible. Also, the length of the leg portion 92b along the Z-axis direction is preferably as small as possible, although it depends on the positional relationship with the fixing member 354a.

As shown in FIG. 3A, the thickness of the leg portion 92b of the lead 16a (the thickness in the Y-axis direction) is defined as t. The thickness direction of the leg portion 92b of the lead 16a is parallel to the direction of the distance T1 between the long-side edges 13a and 13b of the lid 12 (Y-axis direction). In this case, 0.20 ≤ t/T1 ≤ 0.45, for example, is preferably satisfied. As an example, t = 3 mm and T1 = 14 mm. In this case, t/T1 = 0.21.

The size (width) of the leg portion 92b in the direction along the X-axis direction is preferably larger than the size (thickness t) thereof in the direction along the Y-axis direction. The length of the leg portion 92b along the Z-axis direction is larger than the width thereof in the X-axis direction and the thickness thereof along the Y-axis direction.

As shown in FIG. 1B, the base portion 92a of the lead 16a of the pair of leads 16a and 16b having conductivity is disposed in the receiving portion 62a of the second face 18b of the insulating member 18. The columnar portion 34a of the terminal 14a is disposed in the receiving portion 62a through the through hole 44a of the lid 12 and the through hole 54a of the insulating member 18. The columnar portion 34a of the terminal 14a is caulked in a state of being disposed in the opening 92c of the base portion 92a of the lead 16a disposed in the receiving portion 62a. Thus, the terminal 14a holds and fixes the lid 12, the insulating member 18, and the base portion 92a of the lead 16a. On this occasion, the terminal 14a and the lead 16a are electrically connected to each other.

Likewise, the other lead 16b includes the base portion 94a and one leg portion 94b extending from the base portion 94a. The base portion 94a is formed in a substantially rectangular flat plate shape. The base portion 94a has an opening 94c in which the columnar portion 34b of the terminal 14b is disposed. The base portion 94a in a flat plate shape is preferably parallel to the XY plane.

As shown in FIG. 1B, the leg portion 94b may be in contact with a fixing member 356a of the electrode group 314 described later. The leg portion 94b extends in the Z-axis direction toward the side opposite to the lid 12. The leg portion 94b does not extend straight in the Z-axis direction from the base portion 94a, but is bent in the Y-axis direction, for example, in the region indicated by the reference numeral 95. In particular, with the base portion 94a of the lead 16b arranged in the receiving portion 62b, the leg portion 94b is bent from the wall 74c toward the wall 74a in the region indicated by the reference numeral 95. This is for the purpose of imparting to the leg portion 94b such springiness that it is certainly brought into contact with the fixing member 356a of the electrode group 314. The region indicated by the reference numeral 95 is preferably at a position close to the base portion 94a in the leg portion 94b. This is for the purpose of making the contact area between the leg portion 94b and the fixing member 356a described later as large as possible. Also, the length of the leg portion 94b along the Z-axis direction is preferably as small as possible, although it depends on the positional relationship with the fixing member 356a.

The base portion 94a of the other lead 16b of the pair of leads 16a and 16b having conductivity is disposed in the receiving portion 62b of the second face 18b of the insulating member 18. The base portion 94a of the other lead 16b has an opening 94c in which the columnar portion 34b of the terminal 14b is disposed. The columnar portion 34b of the terminal 14b is fixed to the base portion 94a by caulking. Thus, the terminal 14b holds and fixes the lid 12, the insulating member 18, and the base portion 94a of the lead 16b. On this occasion, the terminal 14b and the lead 16b are electrically connected to each other.

Therefore, the pair of terminals 14a and 14b are separated from each other in an electrically insulated state and disposed on the lid 12. The pair of leads 16a and 16b are separated from each other in a state of being electrically insulated from each other by the gaskets 22a and 22b.

As shown in FIGS. 1A and 1B, the valve 20 is integrally formed with the lid 12. The valve 20 is provided on the lid 12 between the pair of terminals 14a and 14b. The valve 20 is formed by, for example, press working. The valve 20 is adjacent to the opening 56 in the intermediate region 68 of the insulating member 18. The valve 20 may be opened toward the side where the head portions 32a and 32b of the pair of terminals 14a and 14b are disposed (the front face 12a side of the lid 12) in response to the pressure on the side where the insulating member 18 and the pair of leads 16a and 16b are disposed on the lid 12 (the back face 12b side of the lid 12) reaching a predetermined pressure. The predetermined pressure for opening the valve 20 can be suitably set.

As shown in FIG. 3A, the valve 20 includes an outer border 102 and groove 104 inside the outer border 102. The groove 104 of the valve 20 is formed in an "X" shape inside the outer border 102. A maximum possible opening area S (not shown) with which the valve 20 may be opened is equal to or smaller than the area of the pair of flat adjacent faces 64a and 64b. That is, the maximum possible opening area S with which the valve 20 may be opened is equal to or smaller than the area of the region combining the faces S1, S2, S3, and S4 (the area of the pair of adjacent faces 64a and 64b).

The maximum possible opening area S with which the valve 20 may be opened may be equal to or smaller than the area of the region combining the faces S5 and S6 in the intermediate region 68 in addition to the area of the pair of adjacent faces 64a and 64b (not part of the present invention).

The maximum possible opening area with which the valve 20 may be opened is equal to or smaller than the area of the combination of the virtual planar regions R1 and R2 in the adjacent face 64a and the area of the combination of the virtual planar regions (not shown) in the adjacent face 64b (not part of the present invention).

The maximum possible opening area with which the valve 20 may be opened is equal to or smaller than the area of the opening 56 of the insulating member 18 (not part of the present invention).

### <EXAMPLES>

A lid assembly 10 having the structure shown in FIGS. 1 to 4 was produced with the distance W1 between the pair of short-side edges 13c and 13d being 112 mm, the distance T1 between the pair of long-side edges 13a and 13b being 14 mm, and the thickness of the lid 12 being 1 **mm.** The operating pressure of the valve 20 of the lid assembly 10 was set to 1.0 MPa.

Then, an appropriate outer case was prepared for the lid assembly 10, and the inside of the outer case was sealed with the lid assembly 10. The internal pressure of the outer case was gradually increased from atmospheric pressure at a rate of, for example, 0.2 MPa/min. When the internal pressure of the outer case reached 1.0 MPa, the valve 20 was cut into an "X" shape along the groove 104. Thus, the internal pressure of the outer case was decreased by the cutting of the groove 104 of the valve 20.

When the internal pressure of the outer case reached 1.0 MPa, the pressure of 1.0 MPa was also applied to the leads 16a and 16b and the insulating member 18 in the same manner as applied to the valve 20. Even with the application of such pressure and the cutting of the groove 104 of the valve 20, there was no change in the appearance or the dimensions of the leads 16a and 16b and the insulating member 18. Thus, it was confirmed that the leads 16a and 16b and the insulating member 18 according to the present embodiment can fulfill their respective functions even when the internal pressure of the outer case is increased to a predetermined state.

Therefore, the lid assembly 10 according to the present embodiment includes the valve 20 which is provided on the lid 12 between the pair of terminals 14a and 14b, is adjacent to the opening 56 in the intermediate region 68 of the insulating member 18, and may be opened toward the side where the pair of terminals 14a and 14b are disposed in response to the pressure on the side where the pair of leads 16a and 16b and the insulating member 18 are disposed on the lid 12 reaching a predetermined pressure. In the present embodiment, the lid assembly 10 is provided in which the maximum possible opening area with which the valve 20 may be opened is equal to or smaller than the area of the planes S1, S2, S3, and S4 of the plurality of adjacent faces 64a and 64b.

Also, a lid assembly 10 is provided in which, when virtual faces VS1 and VS2 are defined from the outer edges of the planes of the plurality of adjacent faces (opposing faces) 64a and 64b toward the side opposite to the lid 12 and virtual planar regions R1 and R2 parallel to the planes of the plurality of adjacent faces 64a and 64b are defined between the virtual faces VS1 and VS2 and the plurality of edges 83a and 83b, the maximum possible opening area with which the valve 20 may be opened is equal to or smaller than the area of the planar regions R1 and R2.

### (First Modification)

Next, a first modification will be described with reference to FIG. 5. Here, the insulating member 18 will be described as including walls 72a, 72c, and walls 74a, 74c that are almost the same as those described in the first embodiment.

In the first embodiment, the standing face 88a is described as being parallel to the Z-axis. In the present modification, the standing face 88a is inclined with respect to the Z-axis.

The walls 72a and 72c are also not parallel to the Z-axis, and are inclined with respect to the Z-axis. In the wall 72a, an edge 75a separated from the adjacent face 64a to the side opposite to the side where the lid 12 is disposed is defined. A virtual face VS1 is defined from the edge 75a toward the side opposite to the side where the lid 12 is disposed. In the wall 72c, an edge 75b separated from the adjacent face 64a to the side opposite to the side where the lid 12 is disposed is defined. A virtual face VS2 is defined from the edge 75b toward the side opposite to the side where the lid 12 is disposed. It is assumed that the virtual faces VS1 and VS2 are parallel to the Z-axis. A virtual planar region R1 parallel to the adjacent face 64a is defined between the virtual face VS1 and the edge 83a, and a virtual planar region R2 parallel to the adjacent face 64a is defined between the virtual face VS2 and the edge 83b. The regions R1 and R2 are parallel to the XY plane.

The region R1 may be larger than the region S1, and the region R2 may be larger than the region S2. In this case as well, the maximum possible opening area with which the valve 20 may be opened is equal to or smaller than the area of the combination of the virtual planar regions R1 and R2 in the adjacent face 64a and the area of the combination of the planar regions (not shown) in the adjacent face 64b.

A maximum possible opening area S with which the valve 20 may be opened is equal to or smaller than the area of the pair of flat adjacent faces 64a and 64b. That is, the maximum possible opening area S with which the valve 20 may be opened is equal to or smaller than the area of the region combining the faces S1 (<R1), S2 (<R2), S3, and S4.

### (Second Modification)

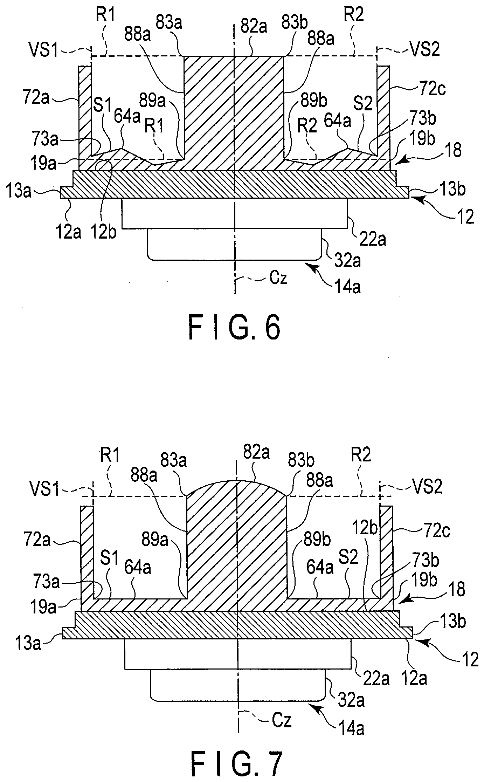

Next, a second modification will be described with reference to FIG. 6. Here, the cross section of the region including the support face 82a of the support face group 66a will be described. Since the description applies to the cross section of the region including the support face 82b of the support face group 66a and the cross section of the region including the support faces 84a and 84b of the support face group 66b, the description thereof will be omitted as appropriate. The same applies to the description of a third modification and subsequent modifications.

In the first embodiment and the first modification, the examples in which the adjacent faces (opposing faces) 64a and 64b are planes is described. In the present modification, an example in which the adjacent face (opposing face) 64a is a non-smooth face (uneven face) having unevenness will be described. Herein, an example in which the adjacent face 64a has unevenness will be described; however, the adjacent face (opposing face) 64b may be a non-smooth face (uneven face) having unevenness. The "non-smooth face (uneven face)" used herein includes all faces that are not flat, such as a concave face and a convex face.

As shown in FIG. 6, the adjacent face 64a is formed as a non-smooth face (uneven face) with a concave portion and/or a convex portion. In this case, in the adjacent face 64a, the face S1 is defined between the edge 73a of the wall 72a forming a boundary with the adjacent face 64a and the edge 89a, and the face S2 is defined between the edge 73b of the wall 72c forming a boundary with the adjacent face 64a and the edge 89b. Herein, virtual planar regions R1 and R2 intersecting with the adjacent face 64a having a concave portion and/or a convex portion are defined. The area of the face R1 is slightly smaller than the area of the face S1, and the area of the face R2 is slightly smaller than the area of the face S2.

The adjacent face 64a may be approximated to a region combining the virtual planes R1 and R2.

Therefore, the lid assembly 10 according to the present embodiment includes the plurality of adjacent faces (opposing faces) 64a and 64b which are arranged on the side opposite to the lid 12 and between the base portions 92a and 94a of the pair of leads 16a and 16b, and for which the virtual planes R1 and R2 parallel to at least a part of the front face of the lid 12 are defined. A maximum possible opening area S (not shown) with which the valve 20 may be opened is equal to or smaller than the area of the pair of adjacent faces 64a and 64b as virtual planes. The virtual planes R1 and R2 can be approximated to the faces S1 and S2. That is, the maximum possible opening area S with which the valve 20 may be opened is equal to or smaller than the approximated area of the region combining the faces S1, S2, S3, and S4 (the area of the pair of adjacent faces 64a and 64b). Thus, in the present modification, a lid assembly 10 is provided in which the maximum possible opening area with which the valve 20 may be opened is equal to or smaller than the area of the faces S1, S2, S3, and S4 of the plurality of adjacent faces 64a and 64b.

### (Third Modification)

Next, a third modification will be described with reference to FIG. 7. In FIG. 7, the adjacent face 64a is illustrated as being the same as those described in the first embodiment and the first modification; however, the adjacent face 64a may be the same as that described in the second modification.

In the first embodiment, the first modification, and the second modification, each support face 82a of the support face group 66a is described as being parallel to the XY plane.

As shown in FIG. 7, the support face 82a may be formed so as to protrude toward the side opposite to the lid 12 (Z-axis direction) with respect to the edges 83a and 83b.

### (Fourth Modification)

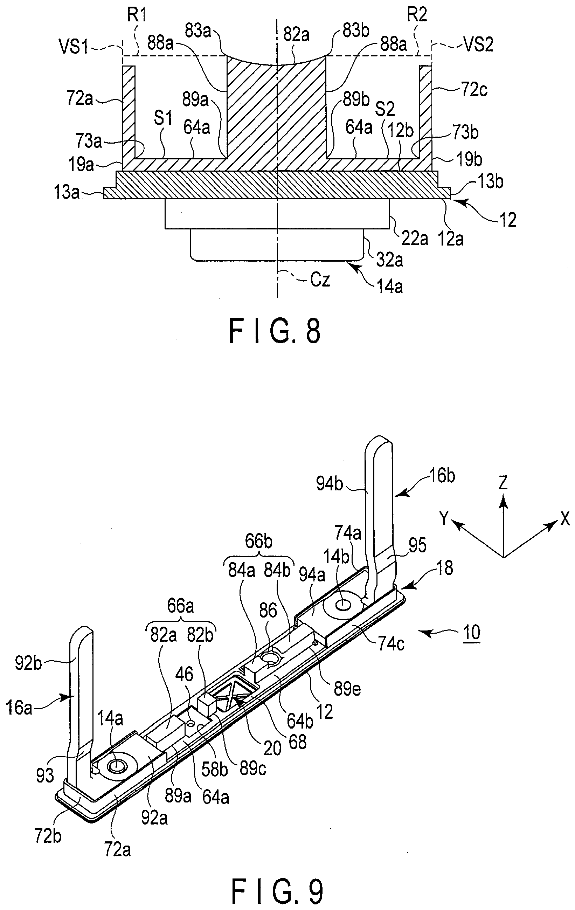

Next, a fourth modification will be described with reference to FIG. 8. This modification is a further modification of the third modification.

As shown in FIG. 8, the support face 82a may be formed so as to be depressed toward the back face 12b of the lid 12 with respect to the edges 83a and 83b.

Although not shown, the support face 82a may be formed by combining one or more concave portions and/or one or more convex portions. The one or more concave portions and/or the one or more convex portions may include a non-slip feature such as pear skin finish.

### (Fifth Modification)

Next, a fifth modification will be described with reference to FIGS. 9 to 11. The structures of the insulating members 18 of the first embodiment and the modifications described above can be appropriately combined with the insulating member 18 of the present modification.

The second small holes 58a and 58b and the support face groups 66a and 66b of the insulating member 18 of the lid assembly 10 of the first embodiment have been described as being formed symmetrically with respect to the central axis Cx parallel to the X-axis and the central axis Cy parallel to the Y-axis, respectively. In the present modification, an example in which the second small holes 58a and 58b and the support face groups 66a and 66b are asymmetrical with respect to the central axis Cy, as shown in FIGS. 9 to 11, will be described.

The walls 72a and 72c herein extend from the short side 19c along the long sides 19a and 19b to the boundary between the receiving portion 62a and the adjacent face 64a. The base portion 92a (described later) of the lead 16a is arranged between the walls 72a and 72c. Thus, the walls 72a and 72c are shorter than the walls 72a and 72c described in the first embodiment. The walls 74a and 74c herein extend from the short side 19d along the long sides 19a and 19b to the boundary between the receiving portion 62b and the adjacent face 64b. The base portion 94a (described later) of the lead 16b is arranged between the walls 74a and 74c. Thus, the walls 74a and 74c are shorter than the walls 74a and 74c described in the first embodiment. In this manner, the positions of the ends of the walls 72a, 72c, 74a, and 74c are suitably set.

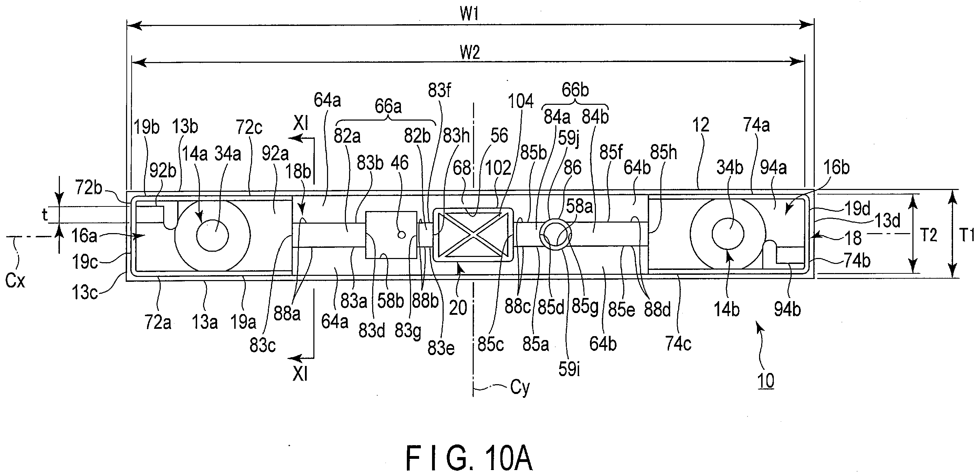

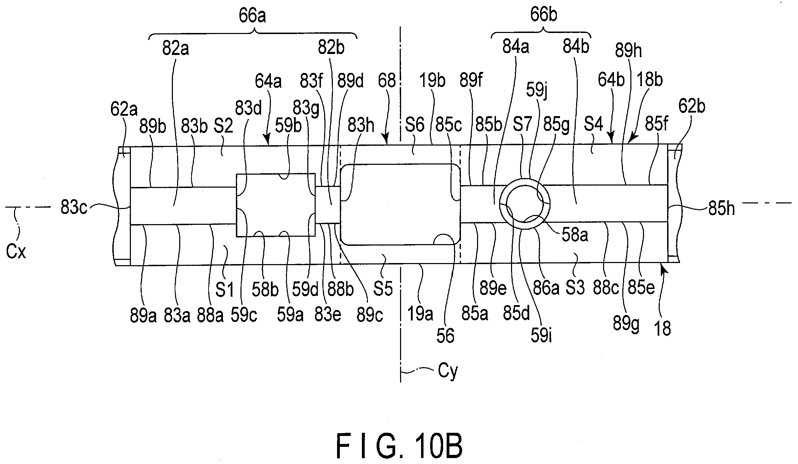

As shown in FIGS. 10A and 10B, the lid assembly 10 of the present modification is symmetrical with respect to the central axis Cx parallel to the X-axis, excluding the pair of leads 16a and 16b. The second small hole 58b is formed in the same manner as described in the first embodiment.

A tubular portion 86 having a substantially cylindrical shape, for example, is formed between the support faces 84a and 84b. The tubular portion 86 communicates with the second small hole 58a having a shape different from that described in the first embodiment. The first small hole 46 of the lid 12 may communicate with the tubular portion 86. The second small holes 58a and 58b may have different shapes.

Herein, the edges 85d and 85g are formed in the same arc shape as that of the outer edge of the tubular portion 86.

As shown in FIGS. 9 to 10B, the position in the Z-axis direction of the end face 86a of the tubular portion 86 that may face the electrode group 314 is different from that of the plurality of support faces 84a and 84b. In particular, the height (distance) of the end face 86a with respect to the adjacent face 64b is smaller than the height (distance) of the support faces 84a and 84b with respect to the adjacent face 64b. Thus, the end face 86a of the tubular portion 86 is not in contact with the electrode group 314, and may be included as a part of the adjacent face (opposing face) 64b. Therefore, the adjacent face 64b may include steps different in distance to the support faces 84a and 84b in the Z-axis direction.

A region of the end face 86a of the tubular portion 86 is defined as S7. The adjacent face 64a is formed as a region combining the faces S1 and S2. The other adjacent face 64b is formed as a region combining the faces S3, S4, and S7. The intermediate region 68 also includes regions indicated by faces S5 and S6.

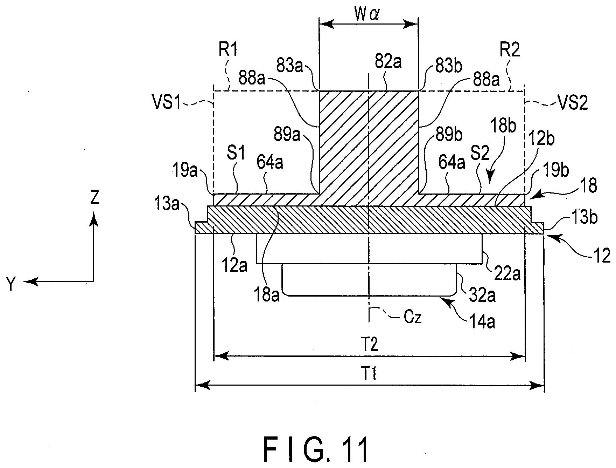

Herein, as shown in FIGS. 10B and 11, a region between the edge 89a of the adjacent face 64a and the long side 19a, between the edge 89c of the adjacent face 64a and the long side 19a, and between the edge 59a of the second small hole 58b and the long side 19a is defined as S1. A region between the edge 89b of the adjacent face 64a and the long side 19b, between the edge 89d of the adjacent face 64a and the long side 19b, and between the edge 59b of the second small hole 58b and the long side 19b is defined as S2.

As shown in FIGS. 10A and 10B, a region between the edge 89e of the adjacent face 64b and the long side 19a, between the edge 89g of the adjacent face 64b and the long side 19a, and between the edge 59i of the second small hole 58a and the long side 19a is defined as S3. A region between the edge 89f of the adjacent face 64b and the long side 19b, between the edge 89h of the adjacent face 64b and the long side 19b, and between the edge 59j of the second small hole 58a and the long side 19b is defined as S4. The maximum possible opening area S with which the valve 20 may be opened is equal to or smaller than the area of the region combining the faces S1, S2, S3, S4, and S7.

The maximum possible opening area S with which the valve 20 may be opened may be equal to or smaller than the area of the region combining the faces S5 and S6 in the intermediate region 68 in addition to the area of the pair of adjacent faces 64a and 64b (not part of the present invention).

### (Sixth Modification)

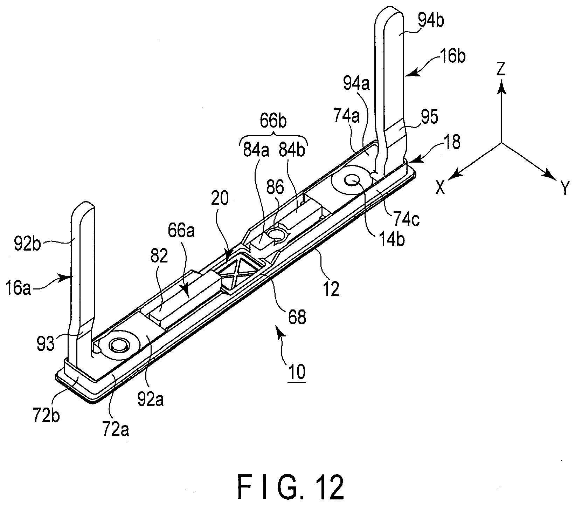

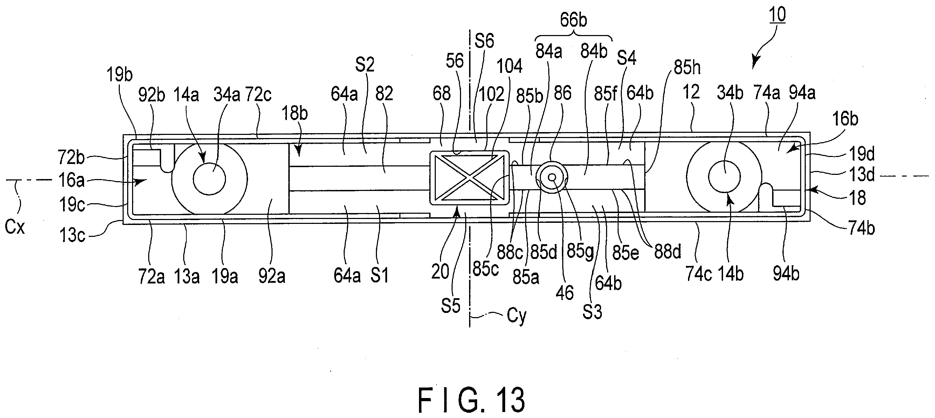

Next, a sixth modification will be described with reference to FIGS. 12 and 13. The structures of the insulating members 18 of the first embodiment and the modifications described above can be appropriately combined with the insulating member 18 of the present modification.

The support face group 66a of the lid assembly 10 of the first embodiment is described as including a plurality of support faces 82a and 82b. In the present modification, as shown in FIGS. 12 and 13, the support face group 66a of the lid assembly 10 includes only one support face 82. In FIG. 12, the tubular portion 86 is formed between the support faces 84a and 84b of the support face group 66b. Instead of the tubular portion 86, the second small hole 58a (see FIG. 1A) may be formed.

As shown in FIG. 4, virtual faces VS1 and VS2 are defined from the edges 73a and 73b in the flat adjacent face 64a toward the side opposite to the side where the lid 12 is disposed. It is assumed that the virtual faces VS1 and VS2 are parallel to the Z-axis. A virtual planar region R1 parallel to the adjacent face 64a is defined between the virtual face VS1 and the edge 83a, and a virtual planar region R2 parallel to the adjacent face 64a is defined between the virtual face VS2 and the edge 83b. The regions R1 and R2 are parallel to the XY plane. The regions R1 and R2 are substantially congruent with the faces S1 and S2. That is, the areas of the regions R1 and R2 substantially coincide with the areas of the faces S1 and S2. Therefore, the maximum possible opening area S with which the valve 20 may be opened is equal to or smaller than the area of the region combining the faces S1, S2, S3, and S4 (the area of the pair of adjacent faces 64a and 64b).

In the first embodiment, a description is given in which the short-side edge 13c of the lid 12 and the short side 19d of the insulating member 18 may be brought close to each other. Herein, because the first small hole 46 is closed in this state, the short-side edge 13c of the lid 12 and the short side 19c of the insulating member 18 need to be brought close to each other. That is, in regard to the relationship between the lid 12 and the insulating member 18 according to the present embodiment, the orientations of the lid 12 and the insulating member 18 are appropriately defined.

### (Seventh Modification)

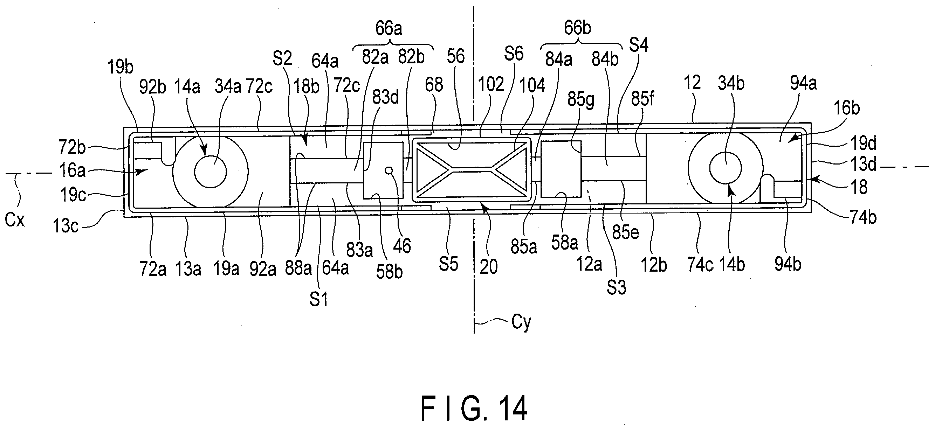

Next, a seventh modification will be described with reference to FIG. 14.

In the first embodiment, the example in which the valve 20 has the X-shaped groove 104 is described. In the present modification, the groove 104 of the valve 20 is formed in a pair of "Y" shapes opposing to each other with a common leg inside the outer border 102.

The outer border 102 of the valve 20 is not limited to a substantially rectangular shape, and may have various shapes such as a substantially elliptical shape.

In the first embodiment, the case where the valve 20 is exposed to the front face 12a of the lid 12 is described; however, the valve 20 need not necessarily be exposed to the front face 12a of the lid 12.

### (Second Embodiment)

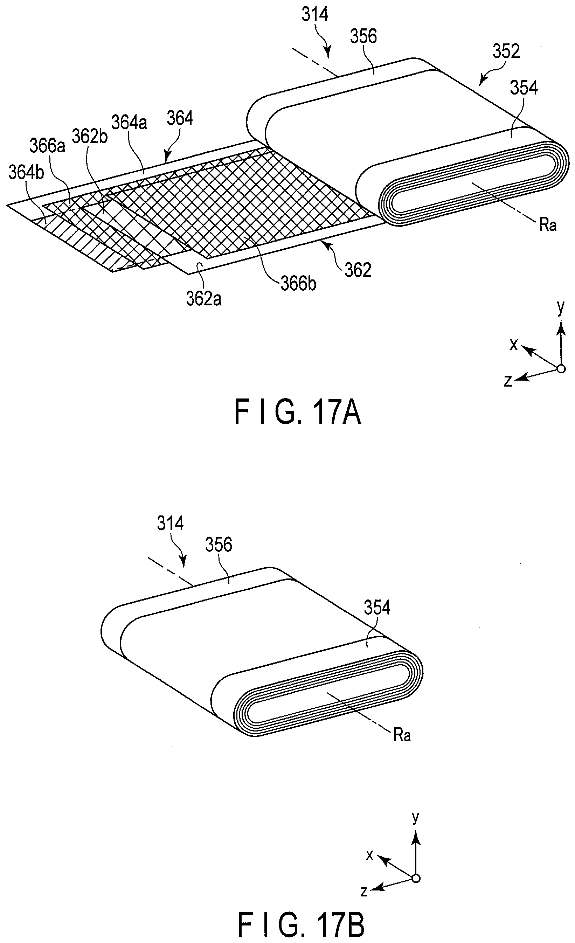

Next, a second embodiment will be described with reference to FIGS. 15 to 19.

In the present embodiment, a battery 310 will be described in which the lid assembly 10 described in the first embodiment including the modifications may be used.

With the progress of electronic devices such as mobile phones and personal computers, secondary batteries used in these devices have been required to be reduced in size and weight. A lithium ion secondary battery is an example of a secondary battery having a high energy density that meets such demand. On the other hand, secondary batteries such as lead storage batteries and nickel-metal hydrogen batteries have been used as large-size and large-capacity power sources typified by use in electric vehicles, hybrid vehicles, electric motorcycles, forklifts, and the like. In recent years, the use of lithium ion secondary batteries having a high energy density has been actively developed. In the development of lithium ion secondary batteries to meet the demand, large-sized and large-capacity lithium ion secondary batteries have been developed while taking long life, safety, and the like into consideration.

In the nonaqueous electrolyte batteries such as lithium ion secondary batteries, batteries having approximately 10 Ah, for example, generally have a small thickness and a large height and width. However, it is considered that such a thin battery has difficulty in holding the electrode group and has difficulty in securing a gas flow channel.

In the present embodiment, an example will be described in which the representative lid assembly 10 among the modifications of the first embodiment is used. Although not shown in the figures, the lid assembly 10 described in each modification of the first embodiment may be used as a part of the battery 310.

In the present embodiment, the battery 310 includes an outer case 312, the electrode group 314, and the lid assembly 10.

In a manner similar to the first embodiment, an XYZ orthogonal coordinate system is adopted. The height of the battery 310 on the outer side of the battery is defined as H11, the width thereof is defined as W11, and the thickness thereof is defined as T11.

As an example of the battery 310, a lithium ion secondary battery as a nonaqueous electrolyte battery capable of charge and discharge will be described.

The outer case 312 includes a bottom wall 322 and sidewalls 324. The outer case 312 has a bottomed tubular shape, and an opening 326 is formed by the sidewalls 324.

The bottom wall 322 is formed in a substantially rectangular shape. The bottom wall 322 is parallel to the XY plane and includes a pair of long-side edges 332a and 332b parallel to the X-axis direction and a pair of short-side edges 334a and 334b parallel to the Y-axis direction. The sidewalls 324 include: a pair of long-side sidewalls 336a and 336b, with the long-side edge 332a of the bottom wall 322 as a boundary with the long-side sidewall 336a, and with the long-side edge 332b of the bottom wall 322 as a boundary with the long-side sidewall 336b; and a pair of short-side sidewalls 338a and 338b, with the short-side edge 334a of the bottom wall 322 as a boundary with the short-side sidewall 338a, and with the short-side edge 334b of the bottom wall 322 as a boundary with the short-side sidewall 338b. The sidewalls 336a, 336b, 338a, and 338b extend parallel to the Z-axis from the bottom wall 322 toward the opening 326.

In a manner similar to the bottom wall 322, the opening 326 is parallel to the XY plane. The opening 326 has a substantially rectangular shape including a pair of long sides (long-side edges) 342a and 342b parallel to the X-axis direction and a pair of short sides (short-side edges) 344a and 344b parallel to the Y-axis direction. Therefore, the outer case 312 of the present embodiment has a square can shape.

The distance T12 (<T11) between the long sides 342a and 342b of the opening 326 can be substantially equated with the distance between the inner walls of the pair of long-side sidewalls 336a and 336b. The distance T12 can be substantially equated with the distance T2 between the pair of long sides 19a and 19b of the insulating member 18 of the lid assembly 10. The distance W12 (<W11) between the short sides 344a and 344b of the opening 326 can be substantially equated with the distance between the inner walls of the pair of short-side sidewalls 338a and 338b. The distance W12 can be substantially equated with the distance W2 between the pair of short sides 19c and 19d of the insulating member 18 of the lid assembly 10.

Herein, 7 ≤ W12/T12 ≤ 13 is preferably satisfied. 0.02 ≤ Wα/T12 ≤ 0.04 is preferably satisfied.

The outer case 312 is formed of, for example, a plate made of a metal. For example, aluminum, an aluminum alloy, iron, stainless steel, or the like may be used as the metal. The lid 12 of the lid assembly 10 is preferably made of the same material as that of the outer case 312, but may be made of a different material.

The long-side sidewalls 336a and 336b of the outer case 312 occupy the largest area of the outer case 312. Therefore, it is preferable to reduce the thickness of the plate forming the long-side sidewalls 336a and 336b of the outer case 312 to the extent possible to improve the heat dissipation capability of the battery 310. The thickness of the plate forming the long-side sidewalls 336a and 336b of the outer case 312 is preferably 2.0 mm or less, and more preferably 1.0 mm or less.

On the other hand, the stiffness decreases as the plate thickness of the long-side sidewalls 336a and 336b of the outer case 312 decreases. Thus, for example, the thickness of the plate forming the long-side sidewalls 336a and 336b of the outer case 312 is preferably 0.3 mm or more, and more preferably 0.5 mm or more.

Like the plate thickness of the long-side sidewalls 336a and 336b, the thickness of the plate forming the short-side sidewalls 338a and 338b of the outer case 312 is also preferably 2.0 mm or less, and more preferably 1.0 mm or less. Like the plate thickness of the long-side sidewalls 336a and 336b and the plate thickness of the short-side sidewalls 338a and 338b, the plate thickness of the bottom wall 322 is also preferably 2.0 mm or less, and more preferably 1.0 mm or less.

The plate thickness of each of the bottom wall 322, the long-side sidewalls 336a and 336b, and the short-side sidewalls 338a and 338b of the outer case 312 is obtained by measuring the thickness of the central portion of the plate using a micrometer. For example, Quick Mini PK-1012CPS manufactured by Mitsutoyo Corporation, or a device having a function equivalent thereto is used as the micrometer.

The plate thickness of the bottom wall 322 of the outer case 312 is obtained by the following process. First, the plate forming the bottom wall 322 is cut in parallel with the YZ plane at the central position along the X-axis direction. Next, the plate thickness is measured at the central position along the Y-axis direction of the cut face, and set as the plate thickness of the bottom wall 322 of the outer case 312.

The thickness of the plate forming the long-side sidewalls 336a and 336b of the outer case 312 is obtained by the following process. First, the plate forming the long-side sidewalls 336a and 336b is cut in parallel with the XY plane at the central position along the Z-axis direction. Next, the plate thickness is measured at the central position along the X-axis direction of the cut face, and set as the plate thickness of the long-side sidewalls 336a and 336b of the outer case 312.

The thickness of the plate forming the short-side sidewalls 338a and 338b of the outer case 312 is obtained by the following process. First, the plate forming the short-side sidewalls 338a and 338b is cut in parallel with the XY plane at the central position along the Z-axis direction. Next, the plate thickness is measured at the central position along the Y-axis direction of the cut face, and set as the plate thickness of the short-side sidewalls 338a and 338b of the outer case 312.

The electrode group 314 includes a positive electrode 362, a negative electrode 364, and a plurality of separators (electrical insulating layers) 366. Each of the positive electrode 362, the negative electrode 364, and the separators 366 is formed in, for example, a strip shape with a sufficient length with respect to the width. The separator 366 is disposed between the positive electrode 362 and the negative electrode 364. When the positive electrode 362, the separator 366, and the negative electrode 364 are wound in a roll shape about a winding axis Ra in this state, a rolled body 352 is formed. The rolled body 352 is formed into a flat shape after it is wound or while it is wound.

In this case, the electrode group 314 includes the rolled body 352 formed in a flat shape, a positive electrode current-collecting tab 354, and a negative electrode current-collecting tab 356. The positive electrode current-collecting tab 354 and the negative electrode current-collecting tab 356 are separated from each other along the winding axis. The separator 366 is exposed on an outer face of the rolled body 352.

The positive electrode 362 of the rolled body 352 of the electrode group 314 includes a positive electrode current collector 362a and a positive electrode active material-containing layer 362b. The positive electrode current-collecting tab 354 is a portion not covered with the positive electrode active material-containing layer 362b on the positive electrode current collector 362a.

The positive electrode current collector 362a is, for example, a metal foil of aluminum, an aluminum alloy, copper, nickel, or the like. The positive electrode current-collecting tab 354 may not be integrated with the positive electrode current collector 362a. That is, the positive electrode current-collecting tab 354 may be formed by bonding a metal foil to one of the long sides of the positive electrode current collector 362a. The metal foil may be the same as that used for the positive electrode current collector 362a.

The positive electrode active material-containing layer 362b may be provided on either both or one of the main surfaces of the positive electrode current collector 362a. The positive electrode active material-containing layer 362b includes a positive electrode active material. The positive electrode active material-containing layer 362b may include a conductive agent and a binder in addition to the positive electrode active material.

For example, a lithium transition metal composite oxide is used as the positive electrode active material. Examples of the lithium transition metal composite oxide include LiCoO₂, LiNi₁₋ₓCoₓO₂ (0 < x < 0.3), LiMnₓNi_{y}Co_{z}O₂ (0 < x < 0.5, 0 < y ≤ 0.8, 0 ≤ z < 0.5), LiMn₂₋ₓMₓO₄ (M is at least one element selected from the group consisting of Mg, Co, Al and Ni, 0 < x < 0.2), and LiMPO₄ (M is at least one element selected from the group consisting of Fe, Co, Ni and Mn).

The average particle size of the secondary particles of the positive electrode active material is preferably 10 µm or less, and more preferably 6 µm or less. When the average particle size of the secondary particles of the positive electrode active material is small, the internal resistance is small, and thus heat dissipation accompanying charge and discharge tends to be small. Therefore, when the average particle size of the secondary particles of the positive electrode active material is small, the life performance of the battery 310 can be improved.

The conductive agent improves the electron conductivity of the electrode. A carbonaceous material such as acetylene black, carbon black, or graphite may be used as the conductive agent.

The binder increases the adhesion between the active material, the conductive agent, and the current collector. Polytetrafluoroethylene (PTFE), polyvinylidene fluoride (PVdF), fluorine rubber, or the like may be used as the binder.

In the positive electrode active material-containing layer 362b, the mixing ratio of the positive electrode active material, the conductive agent, and the binder is preferably set as follows: the positive electrode active material in the range of 80% to 95% by mass, the conductive agent in the range of 3% to 18% by mass, and the binder in the range of 2% to 7% by mass.

The density of the positive electrode active material-containing layer 362b is preferably from 2.79/cm³ to 3.39/cm³. It has been found that when the density of the positive electrode active material-containing layer 362b is within this range, the life performance of the battery 310 tends to be high. That is, when the density of the positive electrode active material-containing layer 362b is 3.39/cm³ or less, twisting of the positive electrode is less likely to occur during gas generation, and widening of the distance between the electrodes can be suppressed, allowing for improvement of the performance of the battery 310. Also, when the density of the positive electrode active material-containing layer 362b is 2.79/cm³ or more, the distance between the positive electrode active material particles becomes appropriate, and thus the internal resistance tends to be decreased.

The negative electrode 364 of the rolled body 352 of the electrode group 314 includes a negative electrode current collector 364a and a negative electrode active material-containing layer 364b. The negative electrode current-collecting tab 356 is a portion not covered with the negative electrode active material-containing layer 364b on the negative electrode current collector 364a.

The negative electrode current collector 364a is, for example, a metal foil of aluminum, an aluminum alloy, copper, nickel, or the like. The negative electrode current-collecting tab 356 may not be integrated with the negative electrode current collector 364a. That is, the negative electrode current-collecting tab 356 may be formed by bonding a metal foil to one of the long sides of the negative electrode current collector 364a. The metal foil may be the same as that used for the negative electrode current collector 364a.

The negative electrode active material-containing layer 364b may be provided on either both or one of the main surfaces of the negative electrode current collector 364a. The negative electrode active material-containing layer 364b includes a negative electrode active material. The negative electrode active material-containing layer 364b may include a conductive agent and a binder in addition to the negative electrode active material.

Preferably used as the negative electrode active material is a compound whose lower limit of the potential at which lithium ions can be charged and discharged is 1.0 V (vs. Li/Li⁺) or more. A lithium titanium composite oxide is preferably used as such a compound. Lithium titanium composite oxides hardly undergo a volume change accompanying charge-and-discharge reaction. Therefore, when a lithium titanium composite oxide is used as the negative electrode active material, expansion and contraction of the electrode can be suppressed. Accordingly, when a lithium titanium composite oxide is used as the negative electrode active material, twisting of the electrode is even less likely to occur during gas generation. Also, lithium titanium composite oxides exhibit low heat dissipation accompanying charge and discharge. Therefore, when a lithium titanium composite oxide is used as the negative electrode active material, the life performance of the battery 310 can be improved even when the areas of the long-side sidewalls 336a and 336b of the outer case 312 are relatively small and the heat dissipation capability is low.

Examples of the lithium titanium composite oxide include Li₄₊ₓTi₅O₁₂ (0 ≤ x ≤ 3) having a spinel structure, Li_{2+y}Ti₃O₇ (0 ≤ y ≤ 3) having a ramsdellite structure, and orthorhombic titanium-containing oxides. Examples of the orthorhombic titanium-containing oxides include sodium-containing niobium titanium composite oxides. Examples of the sodium-containing niobium titanium composite oxides include compounds represented by the general formula Li₂₊ᵥNa_{2-w}M1ₓTi_{6-y-z}Nb_{y}M2_{z}O_{14+δ} (0 ≤ v ≤ 4, 0 < w < 2, 0 ≤ x < 2, 0 < y < 6, 0 ≤ z < 3, y+z < 6, -0.5 ≤ δ ≤ 0.5; M1 includes at least one selected from Cs, K, Sr, Ba, and Ca; M2 includes at least one selected from Zr, Sn, V, Ta, Mo, W, Fe, Co, Mn, and Al).

When a sodium-containing niobium titanium composite oxide is used as the negative electrode active material, the negative electrode potential can be decreased, as compared to the case where Li₄₊ₓTi₅O₁₂ is used, and thus the voltage of the battery 310 can be increased.

The average primary particle size of the negative electrode active material is preferably 1 µm or less. When the average particle size of the primary particles of the negative electrode active material is small, the internal resistance decreases, and thus heat dissipation accompanying charge and discharge tends to be decreased. Therefore, when the average particle size of the primary particles of the negative electrode active material is small, the life performance of the battery 310 can be improved.

The negative electrode active material-containing layer 364b may include a negative electrode active material other than a lithium titanium composite oxide. Examples of such another negative electrode active material include carbonaceous materials such as graphite and tin-silicon-based alloy materials.

The conductive agent improves the electron conductivity of the electrode. Acetylene black, carbon black, graphite, or the like may be used as the conductive agent.

The binder increases the adhesion between the active material, the conductive agent, and the current collector. Examples of the binder include polytetrafluoroethylene (PTFE), polyvinylidene fluoride (PVdF), fluorine rubber, and styrene-butadiene rubber.

In the negative electrode active material-containing layer 364b, the mixing ratio of the negative electrode active material, the conductive agent, and the binder is preferably set as follows: the negative electrode active material in the range of 73% to 98% by mass, the conductive agent in the range of 0% to 20% by mass, and the binder in the range of 2% to 7% by mass.

The separator 366 functions as an insulating layer. The separator 366 is, for example, a porous film or a non-woven fabric. The porous film and the non-woven fabric may each include at least one compound selected from the group consisting of polyethylene, polypropylene, polyethylene terephthalate, and cellulose. The separator 366 may be an organic fiber film or an inorganic film that covers at least a part of the main surfaces of the positive electrode 362 and the negative electrode 364. Instead of the separator 366, a solid electrolyte layer may be used as the insulating layer.

The thickness of the separator 366 is preferably 6 µm to 15 µm. When the thickness of the separator 366 is within this range, the safety, capacity, and life performance of the battery 310 can be improved. That is, when the thickness of the separator 366 is 6 µm or more, the probability of a short circuit between the positive electrode 362 and the negative electrode 364 may be decreased, and thus the safety and reliability of the battery 310 may be improved. On the other hand, when the thickness of the separator 366 is 15 µm or less, an increase in the amount of the auxiliary material in the battery 310 is suppressed, likely leading to an improved energy density. Also, when the thickness of the separator 366 is 15 µm or less, appropriate gaps are present in the outer case 312; and thus, the battery 310 is less likely to expand during gas generation, and the battery characteristics can be improved.

An electrolyte (not shown) may be held by the positive electrode 362, the negative electrode 364, and the separator 366. The electrolyte may be a nonaqueous electrolyte including an electrolyte salt and an organic solvent. That is, the battery 310 according to the embodiment may be a nonaqueous electrolyte battery. The nonaqueous electrolyte may be in the form of a liquid or a gel. The liquid nonaqueous electrolyte is prepared by dissolving an electrolyte in an organic solvent. The gel nonaqueous electrolyte is prepared by gelling a liquid nonaqueous electrolyte using a polymeric material. The concentration of the electrolyte salt in the liquid nonaqueous electrolyte is, for example, 0.5 mol/L to 2.5 mol/L.

Examples of the electrolyte include lithium salts such as lithium perchlorate (LiCl₄), lithium hexafluorophosphate (LiPF₆), lithium tetrafluoroborate (LiBF₄), hexafluoro arsenic lithium (LiAsF₆), lithium trifluoromethanesulfonate (LiCF₃SO₃), bistrifluoromethylsulfonylimide lithium [LiN(CF₃SO₂)₂], and mixtures thereof. The electrolyte is preferably resistant to oxidation even at a high potential, and LiPF₆ is most preferred.

Examples of the organic solvent include: cyclic carbonates such as propylene carbonate (PC), ethylene carbonate (EC), and vinylene carbonate; chain carbonates such as diethyl carbonate (DEC), dimethyl carbonate (DMC), and methyl ethyl carbonate (MEC); cyclic ethers such as tetrahydrofuran (THF), 2-methyl tetrahydrofuran (2-MeTHF), and dioxolan (DOX); chain ethers such as dimethoxyethane (DME) and diethoxyethane (DEE); and γ-butyrolactone (GBL), acetonitrile (AN), and sulfolane (SL). These organic solvents may be used either alone or in the form of a mixture of two or more thereof.

Examples of the polymeric material include polyvinylidene fluoride (PVdF), polyacrylonitrile (PAN), and polyethylene oxide (PEO).

A room temperature molten salt (ionic melt) containing lithium ions or the like may be used as the nonaqueous electrolyte.

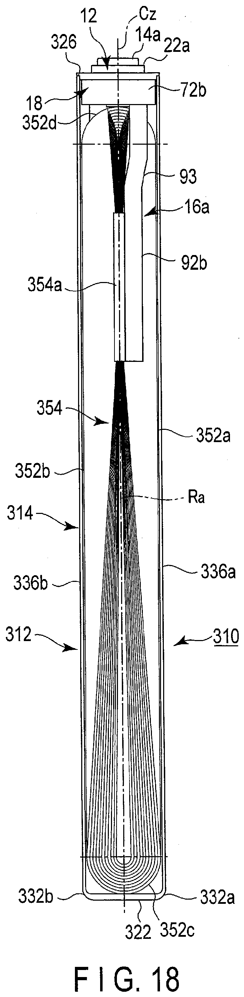

As shown in FIG. 18, the fixing member 354a having conductivity is fixed to the positive electrode current-collecting tab 354. The fixing member 354a is preferably fixed at a position close to an upper face 352d (described later) of the electrode group 314 relative to the winding axis Ra. The fixing member 354a has a substantially U-shaped cross section parallel to the XY plane and clamps a part of the positive electrode current-collecting tab 354. Thus, the fixing member 354a fixes a part of the positive electrode current-collecting tab 354. The fixing member 354a has an appropriate length along the Z-axis direction and may be in surface contact with the leg portion 92b of the lead 16a.

As shown in FIG. 16, the fixing member 356a having conductivity is fixed to the negative electrode current-collecting tab 356. The fixing member 356a is preferably fixed at a position close to the upper face 352d of the electrode group 314 relative to the winding axis Ra. The fixing member 356a has a substantially U-shaped cross section parallel to the XY plane and clamps a part of the negative electrode current-collecting tab 356. Thus, the fixing member 356a fixes a part of the negative electrode current-collecting tab 356. The fixing member 356a has an appropriate length along the Z-axis direction and may be in surface contact with the leg portion 94b of the lead 16b.

The fixing members 354a and 356a are preferably made of a metal material having conductivity, such as aluminum, an aluminum alloy, copper, or nickel.

The rolled body 352 includes a first surface 352a facing or in contact with the inner face of the long-side sidewall 336a, a second surface 352b facing or in contact with the inner face of the long-side sidewall 336b, a bottom face 352c facing or in contact with the bottom wall 322, and the upper face 352d facing or in contact with the insulating member 18 of the lid assembly 10.

The nominal capacity A of the battery 310 in the present embodiment is, for example, 7 Ah or more. Thus, the battery 310 according to the embodiment can be suitably used as a high-capacity battery. The upper limit of the nominal capacity A is not particularly limited, but is, for example, 15 Ah. That is, the battery capacity of the battery 310 according to the present embodiment is preferably from 7 Ah to 15 Ah.

The nominal capacity of the battery 310 is a discharge capacity obtained by the following procedure. First, the battery is charged at a constant current at a rate of 0.05 C up to a maximum working voltage in an environment of 25 °C. Next, the battery is further charged until the current value becomes 0.01 C in a state that the maximum working voltage is maintained. Thereafter, the battery is discharged at a rate of 0.05 C to final voltage to obtain a discharge capacity.

The aforementioned "maximum working voltage" is a maximum voltage at which the battery 310 can be used without any danger or defect, and is a value unique to each battery 310. The maximum working voltage is, for example, a voltage described as a "charge voltage", "security maximum voltage", and the like in the specification sheet or the like of the battery 310. The "final voltage" is the lowest working voltage at which the battery 310 can be used while suppressing overdischarge of both the positive electrode 362 and the negative electrode 364 of the battery 310, that is, suppressing deterioration of the battery 310, and is a value unique to each battery 310.

As shown in FIG. 16, an insulating cover 372 having an electrical insulation property is disposed on the positive electrode current-collecting tab 354 and the fixing member 354a of the electrode group 314. An insulating cover 374 having an electrical insulation property is disposed on the negative electrode current-collecting tab 356 and the fixing member 356a of the electrode group 314. When the inner face of the outer case 312 is coated with an insulating material, the insulating covers 372 and 374 may be unnecessary.

The insulating cover 372 prevents the current-collecting tab 354 and the fixing member 354a from coming into contact with the inner walls of the sidewalls 336a, 336b, and 338a of the outer case 312. The insulating cover 374 prevents the current-collecting tab 356 and the fixing member 356a from coming into contact with the inner walls of the sidewalls 336a, 336b, and 338b of the outer case 312.

The insulating cover 372 includes a support portion 372a that supports the bottom face 352c of the rolled body 352. The insulating cover 374 includes a support portion 374a that supports the bottom face 352c of the rolled body 352.

For example, a resin material selected from polyester (PET), polyimide, polyphenylene sulfide (PPS), and polypropylene can be used as the insulating covers 372 and 374.

The electrode group 314 is inserted through the opening 326 of the outer case 312 in a state that the fixing members 354a and 356a and the insulating covers 372 and 374 are attached to predetermined positions. On this occasion, the support portions 372a and 374a of the insulating covers 372 and 374 are brought into contact with the bottom wall 322.

The lid 12 of the lid assembly 10 described in the first embodiment is disposed on the opening 326 of the outer case 312. On this occasion, the cross section of the battery 310 taken along the XVI-XVI plane in FIG. 15 is formed as shown in FIG. 18. The outer case 312 and the electrode group 314 are preferably symmetrical with respect to the central axis Cz parallel to the Z-axis. The leg portion 92b of the lead 16a of the lid assembly 10 is in surface contact with the fixing member 354a. Although not shown in the figure, the leg portion 94b of the lead 16b of the lid assembly 10 is in surface contact with the fixing member 356a.

As shown in FIG. 16, the lid 12 of the lid assembly 10 is fixed to the opening 326 of the outer case 312 by, for example, welding. On this occasion, the front face 12a and the back face 12b of the lid 12 of the lid assembly 10 are preferably parallel to the bottom wall 322 of the outer case 312.

Then, an electrolyte is filled into the outer case 312 from the first small hole 46, and the first small hole 46 is sealed by welding.

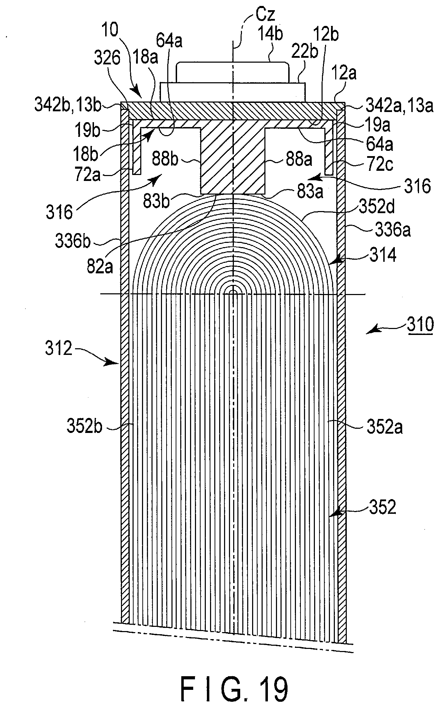

The cross section of the battery 310 taken along the XVII-XVII plane in FIG. 15 is formed as shown in FIG. 19. The upper face 352d of the rolled body 352 of the electrode group 314 is pressed toward the bottom wall 322 of the outer case 312 by the support faces 82a, 82b, 84a, and 84b of the support face groups 66a and 66b. The bottom face 352c of the rolled body 352 is supported by the support portions 372a and 374a of the insulating covers 372 and 374 and is in contact with the bottom wall 322 of the outer case 312. Therefore, the rolled body 352 is supported with the portion between the bottom face 352c and the upper face 352d sandwiched by the bottom wall 322 of the outer case 312 and the support face groups 66a and 66b of the insulating member 18 of the lid assembly 10.

The first surface 352a of the rolled body 352 is in contact with the long-side sidewall 336a of the outer case 312, and the second surface 352b of the rolled body 352 is in contact with the long-side sidewall 336b of the outer case 312.

Thus, even if vibration or impact is applied to the battery 310, the electrode group 314 is prevented from unintentionally moving inside the outer case 312 because the rolled body 352 of the electrode group 314 is supported inside the outer case 312.

Whether the support face 82a of the support face group 66a has, for example, the shape shown in FIG. 7 or the shape shown in FIG. 8, the upper face 352d of the rolled body 352 of the electrode group 314 is pressed toward the bottom wall 322 of the outer case 312 by the support face groups 66a and 66b. Thus, the shape of the support face group 66a that prevents the electrode group 314 from unintentionally moving inside the outer case 312 is not limited to a flat face, and may be an appropriate shape such as a curved face.

In general, it is considered that when gas is generated inside the battery 310, it is generated, for example, from the rolled body 352. On this occasion, the gas escapes, along the winding axis Ra of the rolled body 352, to the outside of the electrode group 314 from the position of the current-collecting tab 354 that is away from the position where the fixing member 354a is fixed. Likewise, the gas escapes, along the winding axis Ra of the rolled body 352, to the outside of the electrode group 314 from the position of the current-collecting tab 356 that is away from the position where the fixing member 356a is fixed.

As the amount of gas generated increases, the gas is accumulated inside the battery 310, and the internal pressure of the battery 310 gradually increases. The gas is accumulated in the gap between the electrode group 314 and the lid assembly 10 inside the outer case 312.

In the outer case 312, the areas of the long-side sidewalls 336a and 336b parallel to the XZ plane are larger than the areas of the short-side sidewalls 338a and 338b parallel to the YZ plane. The thicknesses of the sidewalls 336a, 336b, 338a, and 338b are the same. Thus, the long-side sidewalls 336a and 336b are subjected to higher pressure (internal pressure) than the short-side sidewalls 338a and 338b because the areas of the long-side sidewalls 336a and 336b are larger than those of the short-side sidewalls 338a and 338b. Accordingly, it is assumed that as the amount of gas generated inside the battery 310 increases, the swelling of the long-side sidewalls 336a and 336b gradually increases as compared with the short-side sidewalls 338a and 338b.

In the present embodiment, the lead 16a includes one leg portion 92b, and the lead 16b includes one leg portion 94b. The lead may include two leg portions so as to clamp the fixing member 354a. However, by providing a region 93 created by appropriately bending the leg portion 92b, the contact area between the leg portion 92b of the lead 16a and the fixing member 354a is secured. Also, the leg portion 92b has an appropriate thickness t. Thus, it is possible to form the lead 16a to have the same level of performance as that of a lead with two leg portions while making the volume of the leg portion 92b of the lead 16a with respect to the inside of the battery 310 smaller than in the case where the lead includes two leg portions. Accordingly, even when the outer case 312 has the same internal volume, the space capable of storing gas inside the battery 310 can be increased by the volume of the leg portion 92b of the lead 16a.

Herein, 0.02 ≤ t/T12 ≤ 0.04 is preferably satisfied.

If the gas is vented from an unintended position in the battery 310, the design of a battery pack 510 or the like described later in a third embodiment may also be affected. Thus, it is considered preferable that the gas is vented from a predetermined position in the battery 310 when the internal pressure of the battery 310 reaches a predetermined pressure due to the generation of the gas.

In the present embodiment, the lid assembly 10 includes the valve 20. The insulating member 18 of the lid assembly 10 includes the adjacent faces (opposing faces) 64a and 64b adjacent to the valve 20 and facing the upper face 352d of the rolled body 352 of the electrode group 314. A gap through which gas may be transferred is formed between the upper face 352d of the rolled body 352 of the electrode group 314 and the adjacent faces (opposing faces) 64a and 64b of the insulating member 18. That is, a channel 316 through which gas may be transferred is formed between the upper face 352d of the rolled body 352 of the electrode group 314 and the adjacent faces (opposing faces) 64a and 64b of the insulating member 18, as shown in FIG. 19.

As shown in FIG. 16, an appropriate gap is formed between the insulating cover 372 and the fixing member 354a, and between the insulating cover 327 and the current-collecting tab 354. An end 372b of the insulating cover 372 opposite to the support portion 372a is opened. Thus, the gas also flows and is accumulated between the adjacent face 64a of the lid assembly 10 and the upper face 352d of the rolled body 352 of the electrode group 314.

Thus, the valve 20 of the battery 310 is pressurized by the generated gas from the inside of the battery 310 toward the outside of the battery 310 through the opening 56 of the intermediate region 68 between the adjacent faces (opposing faces) 64a and 64b.

The valve 20 is set to a predetermined pressure of 1.0 MPa, for example.

Herein, a maximum possible opening area with which the valve 20 may be opened is equal to or smaller than the area of the planes of the plurality of adjacent faces (opposing faces) 64a and 64b. Thus, when the valve 20 is opened and the gas in the channel 316 is vented to the outside of the battery 310, a flow for which the gas is vented through the valve 20 can be created.

Therefore, by forming the valve 20 to be appropriately small, the upper face 352d of the rolled body 352 of the electrode group 314 can be reliably pressed toward the bottom wall 322 of the outer case 312 by the support faces 82a, 82b, 84a, and 84b of the support face groups 66a and 66b, even when the upper face 352d of the rolled body 352 of the electrode group 314 is likely to move in the Y-axis direction toward the long-side sidewall 336a or the long-side sidewall 336b due to, for example, vibration, impact, or the like. Accordingly, even in a large-sized battery 310 having a small thickness and a large height and width, for example, the electrode group 314 can be reliably held inside the battery 310. Also, even when gas is generated inside the battery 310, the gas can be vented to the outside of the battery 310 through the valve 20 by securing a gas flow channel when the pressure inside the battery 310 exceeds a predetermined pressure.

When the possible opening area with which the valve 20 may be opened is larger than the area of the planes of the plurality of adjacent faces (opposing faces) 64a and 64b, the efficiency of the gas vent through the valve 20 is highly likely to be worse than in the case where the possible opening area is equal to or smaller than the area of the planes of the plurality of adjacent faces (opposing faces) 64a and 64b.

### <EXAMPLES>

A nonaqueous electrolyte battery 310 having the structure shown in FIG. 15 and having a width W11 of 112 mm, a height H11 of 140 mm, a thickness T11 of 14 mm, and a battery capacity of 11 Ah was produced. The operating pressure of the valve 20 of the lid assembly 10 was set to 1.0 MPa. A lithium nickel cobalt manganese composite oxide represented by LiNi_{0.33}Co_{0.33}Mn_{0.33}O₂ was used as a positive electrode active material. Li₄Ti₅O₁₂ having a spinel-type crystal structure was used as a negative electrode active material. A cellulose nonwoven fabric having a thickness of 20 µm was used as a separator. On the other hand, used as a nonaqueous electrolyte was a nonaqueous electrolytic solution prepared by dissolving, at a concentration of 1 mol/L, lithium hexafluorophosphate LiPF₆ as an electrolyte in a nonaqueous solvent prepared by mixing ethylene carbonate and dimethyl carbonate at a volume ratio of 1:1.

### <Capacity Check Test>

The nonaqueous electrolyte battery 310 was charged at a constant current of 11 A at an ambient temperature of 25 °C. When the battery voltage reached 2.8 V, the battery was charged at a constant voltage of 2.8 V. The charging was terminated when the current value reached 0.5 A. After the suspension for 60 minutes, the battery was discharged at a constant current of 11 A. The discharging was terminated when the battery voltage reached 1.3 V. The discharge capacity was 11 Ah.

### <Oven Test (High-Temperature Exposure Test)>

In a state that the nonaqueous electrolyte battery 310 was restrained, a voltage (2.7 V) corresponding to SOC (state of charge) of 100% was set as a starting voltage, and the temperature was increased from 30 °C by 5 °C/30 min. At this time, the valve 20 was opened at 130 °C to release the gas, and the test was terminated. Explosion, rupture, and ignition did not occur in the battery 310.

From the above tests, it was confirmed that the battery 310 according to the present embodiment was excellent in safety and capacity performance.

Therefore, according to the present embodiment, a battery 310 is provided which includes: the outer case 312 with the opening 326 and the bottom wall 322; the electrode group 314 which includes the pair of current-collecting tabs 354 and 356 and is housed in the outer case 312 through the opening 326; and the lid assembly 10 fixed to the opening 326 of the outer case 312 in a state that the lid 12 and the pair of terminals 14a and 14b are exposed to the outside, the leg portions 92b and 94b of the pair of leads 16a and 16b are electrically connected to the pair of current-collecting tabs 354 and 356, respectively, and the pair of support face groups 66a and 66b support the electrode group 314 with the bottom wall 322.

According to the present embodiment, the lid assembly 10 that can contribute to secure a gas flow channel to the valve 20 in the battery 310, and the battery 310 including the lid assembly 10 are provided.

In the present embodiment, the battery 310 including the lid assembly 10 described in the first embodiment is described; however, even when the battery 310 is formed using the lid assembly 10 described in each modification of the first embodiment, the battery 310 can exhibit the performance described in the second embodiment.

### (Third Embodiment)

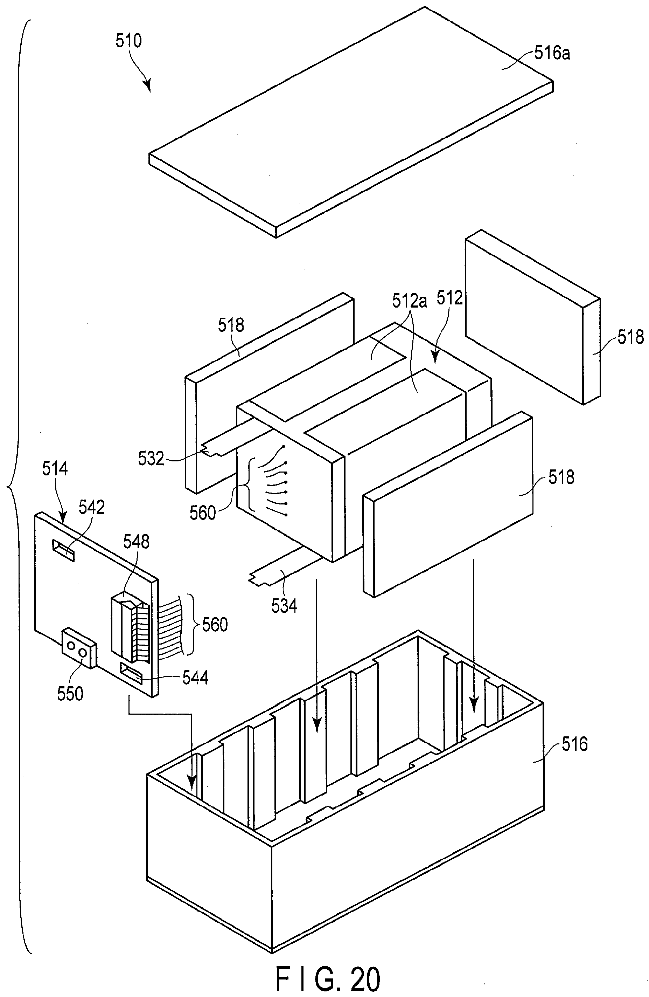

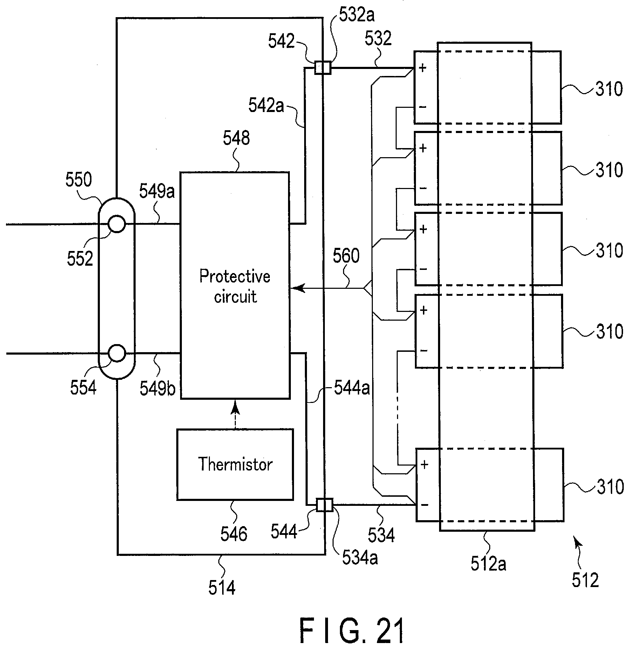

Next, a third embodiment will be described with reference to FIGS. 20 and 21.

In the present embodiment, a battery pack 510 that may be used by connecting the batteries 310 described in the second embodiment will be described.

The battery pack 510 according to the third embodiment may include a plurality of batteries 310. The plurality of batteries 310 may be electrically connected in series or in parallel. Alternatively, the plurality of batteries 310 may be connected in a combination of in-series and in-parallel.

The battery pack 510 according to the third embodiment may include, for example, five batteries 310. These batteries 310 may be connected in series. The batteries 310 connected in series may constitute a battery module 512. That is, the battery pack 510 according to the third embodiment may include the battery module 512.

The battery pack 510 according to the third embodiment may include a plurality of battery modules 512. The plurality of battery modules 512 may be connected in series, in parallel, or in a combination of in-series and in-parallel.

FIG. 20 is an exploded perspective view of an example of the battery pack 510 according to the third embodiment. FIG. 21 is a block diagram showing an example of an electric circuit of the battery pack 510 shown in FIG. 20.

The battery pack 510 shown in FIG. 20 includes a battery module 512 including a plurality of unit cells 310, a circuit board 514, a housing container 516, and a protective sheet 518. For example, the unit cell described in the second embodiment may be used as the unit cell 310.

As shown in FIG. 21, the plurality of unit cells 310 are electrically connected to each other in series.

A printed wiring board 514 is disposed so as to face the side surface from which the positive electrode-side lead 532 and the negative electrode-side lead 534 of the battery module 512 extend. As shown in FIG. 21, the printed wiring board 514 is provided with a thermistor 546, a protective circuit 548, and a terminal 550 for energizing an external device. An insulating plate (not shown) is attached to the surface of the printed wiring board 514 facing the battery module 512 in order to avoid unnecessary connection with the wiring of the battery module 512.

A distal end 532a of the positive electrode-side lead 532 is electrically connected to a positive electrode-side connector 542 of the printed wiring board 514. A distal end 534a of the negative electrode-side lead 534 is electrically connected to a negative electrode-side connector 544 of the printed wiring board 514. These connectors 542 and 544 are connected to the protective circuit 548 through wiring 542a and 544a formed on the printed wiring board 514.

The thermistor 546 detects the temperature of the unit cells 310, so that the detection signals are transmitted to the protective circuit 548. Under a predetermined condition, the protective circuit 548 can shut off plus-side wiring 549a and minus-side wiring 549b between the protective circuit 548 and the terminal 550 (terminals 552 and 554) for energizing an external device. An example of the predetermined condition is a point of time when the temperature detected by the thermistor 546 becomes equal to or higher than a predetermined temperature. Another example of the predetermined condition is a point of time when overcharge, overdischarge, overcurrent, or the like of the unit cell 310 is detected. The detection of the overcharge or the like is performed for the individual unit cells 310 or the battery module 512 as a whole. In the case of detecting the individual unit cells 310, a battery voltage may be detected, or a positive electrode potential or a negative electrode potential may be detected. In the latter case, a lithium electrode used as a reference electrode is inserted into each unit cell 310. In the battery pack 510 shown in FIGS. 20 and 21, wiring 560 for voltage detection is connected to each of the unit cells 310. Detection signals are transmitted to the protective circuit 548 through the wiring 560.

Protective sheets 518 made of rubber or resin are arranged on three side surfaces of the battery module 512, excluding the side surface from which the positive electrode-side lead 532 and the negative electrode-side lead 534 protrude.

The battery module 512 is housed in the housing container 516 together with each protective sheet 518 and the printed wiring board 514. That is, the protective sheets 518 are arranged on both of the inner side surfaces in the long-side direction and one of the inner side surfaces in the short-side direction of the housing container 516, and the printed wiring board 514 is arranged on the other inner side surface in the short-side direction. The battery module 512 is positioned in a space surrounded by the protective sheets 518 and the printed wiring board 514. A cover 516a is attached to an upper face of the housing container 516.

A heat-shrinkable tape may be used to fix the battery module 512 instead of an adhesive tape 512a. In this case, the protective sheets 518 are disposed on the respective side surfaces of the battery module 512, and a heat-shrinkable tape is wound around the battery module 512 and then thermally shrunk to bind the battery module 512.

FIGS. 20 and 21 show the configuration in which the unit cells 310 are connected in series; however, the unit cells 310 may be connected in parallel to increase the battery capacity. Further, assembled battery packs 510 may be connected in series and/or in parallel.

The configuration of the battery pack 510 according to the third embodiment is altered appropriately depending on the application. The battery pack 510 according to the third embodiment is preferably used in applications where cycle performance with large current performance is desired. Specific applications are as power supplies for digital cameras, and on-vehicle applications for two- or four-wheel hybrid electric automobiles, two- or four-wheel electric automobiles, assisted bicycles, and the like. The battery pack 510 according to the third embodiment is particularly suitable for use in the on-vehicle applications.

The battery pack 510 according to the third embodiment includes the battery 310 according to the second embodiment. Therefore, the battery pack 510 according to the third embodiment exhibits excellent impregnating properties of the electrolytic solution and has low resistance.

The battery pack 510 of the third embodiment described in detail above includes the battery 310 of the second embodiment including the lid assembly 10 described in the first embodiment including each modification. Therefore, the battery pack 510 according to the third embodiment can achieve excellent life performance.

While certain embodiments have been described, these embodiments have been presented by way of example only, and are not intended to limit the scope of the inventions. Indeed, the novel embodiments described herein may be embodied in a variety of other forms. The accompanying claims are intended to cover such forms or modifications as would fall within the scope of the inventions.

## Claims

1. A battery (310) comprising:
an outer case (312) comprising an opening (326) and a bottom wall (322);
an electrode group (314) comprising a pair of current-collecting tabs (354, 356) and housed in the outer case (312) through the opening (326); and
a lid assembly (10) comprising:
a plate-shaped lid (12) attached to the opening (326) of the outer case (312) housing the electrode group (314);
a pair of terminals (14a, 14b) each having conductivity, separated from each other in an electrically insulated state, and disposed on the lid (12);
a pair of leads (16a, 16b) each having conductivity, separated from each other in an electrically insulated state, electrically connected to one of the pair of terminals (14a) on a base portion (92a)thereof, electrically connected to one current-collecting tab (354) of the electrode group (314) on a leg portion (92b) extending from the base portion (92a), and electrically connected to another of the pair of terminals (14b) on a base portion (94a) thereof, and electrically connected to another current-collecting tab (356) of the electrode group (314) on a leg portion (94b) extending from the base portion (94a);
an insulating member (18) having an electrical insulation property, provided between the lid (12) and the base portions (92a, 94a) of the pair of leads (16a, 16b), and comprising:
(a) a plurality of adjacent faces (64a, 64b) facing the electrode group (314), provided between the base portions (92a, 94a) of the pair of leads (16a, 16b), and positioned on a side opposite to the lid (12);
(b) a pair of groups of protrusions (66a, 66b) formed on a face (18b) of the insulating member (18) opposite to a face (18a) contacting the lid (12) and coming into contact with the electrode group (314); and
(c) an intermediate region (68) continuous with at least a part of the plurality of adjacent faces (64a, 64b), provided between the pair of groups of protrusions (66a, 66b), and provided with an opening (56) facing the lid (12); and
a valve (20) which is provided to the lid (12) between the pair of terminals (14a, 14b), is adjacent to the opening (56) of the intermediate region (68) of the insulating member (18), and is configured to open toward a side on which the pair of terminals (14a, 14b) are disposed in response to a pressure on a side on which the pair of leads (16a, 16b) and the insulating member (18) are disposed with respect to the lid (12) reaching a predetermined pressure,
the lid assembly (10) being fixed to the opening (326) of the outer case (312) in a state that the lid (12) and the pair of terminals (14a, 14b) are exposed to an outside, where the leg portions (92b, 94b) of the pair of leads (16a, 16b) are electrically connected to the pair of current-collecting tabs (354, 356), respectively, and the pair of groups of protrusions (66a, 66b) are in contact with the electrode group (314),
**characterized in that**
a maximum possible opening area with which the valve (20) is configured to open is equal to or smaller than an area of the plurality of adjacent faces (64a, 64b).

2. The battery (310) according to claim 1, wherein the plurality of adjacent faces (64a, 64b) comprise a non-smooth face with a concave portion and/or a convex portion.

3. The battery (310) according to claim 1 or 2,
wherein at least one of the pair of groups of protrusions (66a, 66b) comprises a plurality of protruded faces (82a, 82b, 84a, 84b) separated from each other.

4. The battery (310) according to claim 3, wherein the plurality of adjacent faces (64a, 64b) comprises steps different in distance to the plurality of protruded faces (82a, 82b, 84a, 84b).

5. The battery (310) according to any one of claims 1 to 4, wherein an amount of protrusion of the pair of groups of protrusions (66a, 66b) with respect to the plurality of adjacent faces (64a, 64b) of the insulating member (18) is larger than a thickness of the base portions (92a, 94a) of the pair of leads (16a, 16b).

6. The battery (310) according to any one of claims 1 to 5, wherein the insulating member (18) comprises receiving portions (62a, 62b) that receive the base portions (92a, 94a) of the pair of leads (16a, 16b), respectively, at positions separated from the intermediate region (68) and continuous with the plurality of adjacent faces (64a, 64b).

7. The battery (310) according to any one of claims 1 to 6, wherein
the lid (12) and the insulating member (18) have a substantially rectangular shape, and
when a length of a long side of the insulating member (18) is defined as W2 and a length of a short side of the insulating member (18) is defined as T2, 7 ≤ W2/T2 ≤ 13 is satisfied.

8. The battery (310) according to any one of claims 1 to 7, wherein the valve (20) comprises an outer border (102) and a groove (104) provided inside the outer border (102).

9. The battery (310) according to any one of claims 1 to 8, wherein the maximum possible opening area with which the valve (20) is configured to open is equal to or smaller than an area of the opening (56) in the intermediate region (68) of the insulating member (18).

10. The battery (310) according to any one of claims 1 to 9, wherein
the opening (326) of the outer case (312) has a substantially rectangular shape, and
when a distance between long sides of the opening (326) of the outer case (312) is defined as T12, and a distance between short sides of the opening (326) of the outer case (312) is defined as W12, 7 ≤ W12/T12 ≤ 13 is satisfied, and
a battery capacity is from 7 Ah to 15 Ah.

11. The battery (310) according to any one of claims 1 to 10, wherein
the opening (326) of the outer case (312) has a substantially rectangular shape,
each of the pair of groups of protrusions (66a, 66b) comprises a plurality of edges facing a long side of the opening (326) of the outer case (312), and
when a distance between the long sides of the opening (326) of the outer case (312) is defined as T12, and a width between the plurality of edges of the pair of groups of protrusions (66a, 66b) parallel to the distance T12 between the long sides is defined as Wα, the pair of groups of protrusions (66a, 66b) of the insulating member (18) satisfy 0.02 ≤ Wα/T12 ≤ 0.04.

12. The battery (310) according to any one of claims 1 to 11, wherein
the opening (326) of the outer case (312) has a substantially rectangular shape, and
when a distance between long sides of the opening (326) of the outer case (312) is defined as T12, and a thickness of the leg portion (92b, 94b) of the lead (16a, 16b) parallel to the distance T12 between the long sides is defined as t, 0.02 ≤ t/T12 ≤ 0.04 is satisfied.

13. A battery pack (510) comprising:
a plurality of batteries (310) according to any one of claims 1 to 12,
which are connected in a combination of in-series and in-parallel;
a protective circuit (548); and
a terminal (550) for energizing an external device.

## Patentansprüche

1. Batterie (310), die Folgendes umfasst:
ein äußeres Gehäuse (312), das eine Öffnung (326) und eine untere Wand (322) umfasst;
eine Elektrodengruppe (314), die ein Paar von Stromsammelansätzen (354, 356) umfasst und durch die Öffnung (326) in dem äußeren Gehäuse (312) untergebracht ist; und
eine Deckelanordnung (10), die Folgendes umfasst:
einen plattenförmigen Deckel (12), der an der Öffnung (326) des äußeren Gehäuses (312), in dem die Elektrodengruppe (314) untergebracht ist, befestigt ist;
ein Paar von Anschlüssen (14a, 14b), wovon jeder eine Leitfähigkeit aufweist, die sich getrennt voneinander in einem elektrischen isolierten Zustand befinden und die an dem Deckel (12) angeordnet sind;
ein Paar von Leitungen (16a, 16b), wovon jede eine Leitfähigkeit aufweist, die sich getrennt voneinander in einem elektrisch isolierten Zustand befinden, die mit einem des Paars von Anschlüssen (14a) an einem Basisabschnitt (92a) davon elektrisch verbunden sind, die mit einem Stromsammelansatz (354) der Elektrodengruppe (314) an einem Beinabschnitt (92b), der sich von dem Basisabschnitt (92a) erstreckt, elektrisch verbunden sind, und die mit einem anderen des Paar von Anschlüssen (14b) an einem Basisabschnitt (94a) davon elektrisch verbunden sind und mit einem anderen Stromsammelansatz (356) der Elektrodengruppe (314) an einem Beinabschnitt (94b), der sich von dem Basisabschnitt (94a) erstreckt, elektrisch verbunden sind;
ein isolierendes Element (18), das eine Isoliereigenschaft aufweist, das zwischen dem Deckel (12) und den Basisabschnitten (92a, 94a) des Paars von Leitungen (16a, 16b) vorgesehen ist und Folgendes umfasst:
(a) mehrere benachbarte Flächen (64a, 64b), die der Elektrodengruppe (314) zugewandt sind, die zwischen den Basisabschnitten (92a, 94a) des Paars von Leitungen (16a, 16b) vorgesehen sind und an einer dem Deckel (12) gegenüberliegenden Seite positioniert sind;
(b) ein Paar von Gruppen von Vorsprüngen (66a, 66b), die auf einer Fläche (18b) des isolierenden Elements (18), die einer Fläche (18a), die den Deckel (12) kontaktiert, gegenüberliegt, gebildet sind, und mit der Elektrodengruppe (314) in Kontakt treten; und
(c) einen Zwischenbereich (68), der zumindest mit einem Teil der mehreren benachbarten Flächen (64a, 64b) zusammenhängend ist, zwischen dem Paar von Gruppen von Vorsprüngen (66a, 66b) vorgesehen ist und mit einer Öffnung (56) versehen ist, die dem Deckel (12) zugewandt ist; und
ein Ventil (20), das an dem Deckel (12) zwischen dem Paar von Anschlüssen (14a, 14b) vorgesehen ist, neben der Öffnung (56) des Zwischenbereichs (68) des isolierenden Elements (18) liegt und konfiguriert ist, als Antwort darauf, dass ein Druck auf eine Seite, auf der das Paar von Leitungen (16a, 16b) und das isolierende Element (18) bezüglich des Deckels (12) angeordnet sind, einen vorgegebenen Druck erreicht, zu einer Seite hin zu öffnen, auf der das Paar von Anschlüssen (14a, 14b) angeordnet ist,
wobei die Deckelanordnung (10) in einem Zustand, in dem der Deckel (12) und das Paar von Anschlüssen (14a, 14b) einer Außenseite ausgesetzt sind, an der Öffnung (326) des äußeren Gehäuses (312) befestigt ist, wobei die Beinabschnitte (92b, 94b) des Paars von Leitungen (16a, 16b) jeweils mit dem Paar von Stromsammelansätzen (354, 356) elektrisch verbunden sind, und das Paar von Gruppen von Vorsprüngen (66a, 66b) sich in Kontakt mit der Elektrodengruppe (314) befindet,
**dadurch gekennzeichnet, dass**
das Ventil (20) konfiguriert ist, mit einer maximal möglichen Öffnungsfläche zu öffnen, die kleiner oder gleich einer Fläche der mehreren benachbarten Flächen (64a, 64b) ist.

2. Batterie (310) nach Anspruch 1, wobei die mehreren benachbarten Flächen (64a, 64b) eine nicht glatte Fläche mit einem konkaven Abschnitt und/oder einen konvexen Abschnitt umfassen.

3. Batterie (310) nach Anspruch 1 oder 2, wobei mindestens eine der beiden Gruppen von Vorsprüngen (66a, 66b) mehrere vorspringende Flächen (82a, 82b, 84a, 84b), die voneinander getrennt sind, umfasst.

4. Batterie (310) nach Anspruch 3, wobei die mehreren benachbarten Flächen (64a, 64b) Stufen umfassen, die sich in ihrer Entfernung von den mehreren vorspringenden Flächen (82a, 82b, 84a, 84b) unterscheiden.

5. Batterie (310) nach einem der Ansprüche 1 bis 4, wobei ein Betrag des Vorsprungs der beiden Gruppen von Vorsprüngen (66a, 66b) bezüglich der mehreren benachbarten Flächen (64a, 64b) des isolierenden Elements (18) größer ist als eine Dicke der Basisabschnitte (92a, 94a) des Paars von Leitungen (16a, 16b).

6. Batterie (310) nach einem der Ansprüche 1 bis 5, wobei das isolierende Element (18) Aufnahmeabschnitte (62a, 62b) umfasst, die jeweils an Positionen, die von dem Zwischenbereich (68) getrennt sind und mit den mehreren benachbarten Flächen (64a, 64b) zusammenhängen, die Basisabschnitte (92a, 94a) des Paars von Leitungen (16a, 16b) aufnehmen.

7. Batterie (310) nach einem der Ansprüche 1 bis 6, wobei
der Deckel (12) und das isolierende Element (18) eine im Wesentlichen rechteckige Form aufweisen, und
dann, wenn eine Länge einer langen Seite des isolierenden Elements (18) als W2 definiert ist und eine Länge einer kurzen Seite des isolierenden Elements (18) als T2 definiert ist, 7 ≤ W2/T2 ≤ 13 erfüllt ist.

8. Batterie (310) nach einem der Ansprüche 1 bis 7, wobei das Ventil (20) einen äußeren Rand (102) und eine Nut (104), die innerhalb des äußeren Rands (102) vorgesehen ist, umfasst.

9. Batterie (310) nach einem der Ansprüche 1 bis 8, wobei die maximal mögliche Fläche, mit der das Ventil (20) zum Öffnen konfiguriert ist, kleiner oder gleich einer Fläche der Öffnung (56) in dem Zwischenbereich (68) des isolierenden Elements (18) ist.

10. Batterie (310) nach einem der Ansprüche 1 bis 9, wobei
die Öffnung (326) des äußeren Gehäuses (312) eine im Wesentlichen rechteckige Form aufweist, und
dann, wenn eine Entfernung zwischen langen Seiten der Öffnung (326) des äußeren Gehäuses (312) als T12 definiert ist und eine Entfernung zwischen kurzen Seiten der Öffnung (326) des äußeren Gehäuses (312) als W12 definiert ist, 7 ≤ W12/T12 ≤ 13 erfüllt ist, und
eine Batteriekapazität 7 Ah bis 15 Ah beträgt.

11. Batterie (310) nach einem der Ansprüche 1 bis 10, wobei
die Öffnung (326) des äußeren Gehäuses (312) eine im Wesentlichen rechteckige Form aufweist,
jede des Paars von Gruppen von Vorsprüngen (66a, 66b) mehrere Kanten umfasst, die einer langen Seite der Öffnung (326) des äußeren Gehäuses (312) zugewandt sind, und
dann, wenn eine Entfernung zwischen den langen Seiten der Öffnung (326) des äußeren Gehäuses (312) als T12 definiert ist und eine Breite zwischen den mehreren Kanten des Paars von Gruppen von Vorsprüngen (66a, 66b), die parallel zu der Entfernung T12 zwischen den langen Seiten sind, als Wα definiert ist, das Paar von Gruppen von Vorsprüngen (66a, 66b) des isolierenden Elements (18) 0,02 ≤ Wα/T12 ≤ 0,04 erfüllt.

12. Batterie (310) nach einem der Ansprüche 1 bis 11, wobei
die Öffnung (326) des äußeren Gehäuses (312) eine im Wesentlichen rechteckige Form aufweist, und
dann, wenn eine Entfernung zwischen den langen Seiten der Öffnung (326) des äußeren Gehäuses (312) als T12 definiert ist, und eine Dicke des Beinabschnitts (92b, 94b) der Leitung (16a, 16b), die parallel zu der Entfernung T12 zwischen den langen Seiten ist, als t definiert ist, 0,02 ≤ t/T12 ≤ 0,04 erfüllt ist.

13. Batteriepackung (510), die Folgendes umfasst:
mehrere Batterien (310) nach einem der Ansprüche 1 bis 12,
die in einer Kombination in Reihe und parallel geschaltet sind;
eine Schutzschaltung (548); und
einen Anschluss (550), um einer externen Vorrichtung Energie zuzuführen.

## Revendications

1. Batterie (310) comprenant :
un boîtier externe (312) comprenant une ouverture (326) et une paroi de fond (322) ;
un groupe d'électrodes (314) comprenant une paire de pattes de collecte de courant (354, 356) et logé dans le boîtier externe (312) à travers l'ouverture (326) ; et
un ensemble de couvercle (10) comprenant :
un couvercle en forme de plaque (12) fixé à l'ouverture (326) du boîtier externe (312) logeant le groupe d'électrodes (314) ;
une paire de bornes (14a, 14b) ayant chacune une conductivité, séparées l'une de l'autre dans un état électriquement isolé, et disposées sur le couvercle (12) ;
une paire de conducteurs (16a, 16b) ayant chacun une conductivité, séparés l'un de l'autre dans un état électriquement isolé, connectés électriquement à l'une des bornes de la paire de bornes (14a) sur une partie de base (92a) de ceux-ci, connectés électriquement à une patte de collecte de courant (354) du groupe d'électrodes (314) sur une partie de jambe (92b) s'étendant à partir de la partie de base (92a), et connectés électriquement à une autre borne de la paire de bornes (14b) sur une partie de base (94a) de ceux-ci, et connectés électriquement à une autre patte de collecte de courant (356) du groupe d'électrodes (314) sur une partie de jambe (94b) s'étendant à partir de la partie de base (94a) ;
un élément isolant (18) ayant une propriété d'isolation électrique, prévu entre le couvercle (12) et les parties de base (92a, 94a) de la paire de conducteurs (16a, 16b), et comprenant :
(a) une pluralité de faces adjacentes (64a, 64b) en regard du groupe d'électrodes (314), prévues entre les parties de base (92a, 94a) de la paire de conducteurs (16a, 16b), et positionnées sur un côté opposé au couvercle (12) ;
(b) une paire de groupes de protubérances (66a, 66b) formés sur une face (18b) de l'élément d'isolation (18) opposée à une face (18a) en contact avec le couvercle (12) et entrant en contact avec le groupe d'électrodes (314) ; et
(c) une région intermédiaire (68) continue avec au moins une partie de la pluralité de faces adjacentes (64a, 64b), prévue entre la paire de groupes de protubérances (66a, 66b) et pourvue d'une ouverture (56) en regard du couvercle (12) ; et
une valve (20) qui est prévue sur couvercle (12) entre la paire de bornes (14a, 14b) est adjacente à l'ouverture (56) de la région intermédiaire (68) de l'élément isolant (18), et est configurée pour s'ouvrir vers un côté sur lequel est disposée la paire de bornes (14a, 14b) en réponse au fait qu'une pression sur un côté sur lequel sont disposés la paire de conducteurs (16a, 16b) et l'élément isolant (18) par rapport au couvercle (12) atteint une pression prédéterminée,
l'ensemble de couvercle (10) étant fixé sur l'ouverture (326) du boîtier extérieur (312) dans un état dans lequel le couvercle (12) et la paire de bornes (14a, 14b) sont exposés vers l'extérieur, les parties de jambes (92b, 94b) de la paire de conducteurs (16a, 16b) étant respectivement électriquement connectées à la paire de pattes de collecte de courant (354, 356), et la paire de groupes de protubérances (66a, 66b) étant en contact avec le groupe d'électrodes (314),
**caractérisée en ce que**
l'aire d'ouverture maximale possible selon laquelle la valve (20) est configurée pour s'ouvrir est égale ou inférieure à l'aire de la pluralité de faces adjacentes (64a, 64b).

2. Batterie (310) selon la revendication 1, dans laquelle la pluralité de faces adjacentes (64a, 64b) comprend une face non lisse ayant une partie concave et/ou une partie convexe.

3. Batterie (310) selon la revendication 1 ou 2, dans laquelle au moins un groupe de la paire de groupes de protubérances (66A, 66b) comprend une pluralité de faces saillantes (82a, 82b, 84a, 84b) séparées les unes des autres.

4. Batterie (310) selon la revendication 3, dans laquelle la pluralité de faces adjacentes (64a, 64b) comprend des marches de distances différentes par rapport à la pluralité de faces saillantes (82a, 82b, 84a, 84b).

5. Batterie (310) selon l'une quelconque des revendications 1 à 4, dans laquelle une quantité de saillie de la paire de groupes de protubérances (66a, 66b) par rapport à la pluralité de faces adjacentes (64a, 64b) de l'élément isolant (18) est plus grande que l'épaisseur des parties de base (92a, 94a) de la paire de conducteurs (16a, 16b).

6. Batterie (310) selon l'une quelconque des revendications 1 à 5, dans laquelle l'élément isolant (18) comprend des parties réceptrices (62a, 62b) qui reçoivent respectivement les parties de base (92a, 94a) de la paire de conducteurs (16a, 16b), à des positions séparées de la région intermédiaire (68) et continues avec la pluralité de faces adjacentes (64a, 64b).

7. Batterie (310) selon l'une quelconque des revendications 1 à 6, dans laquelle
la couvercle (12) et l'élément isolant (18) ont une forme essentiellement rectangulaire, et
lorsque la longueur d'un côté long de l'élément isolant (18) est définie par W2 et la longueur d'un côté court de l'élément isolant (18) est définie par T2, la relation 7 ≤ W2/T2 ≤ 13 est satisfaite.

8. Batterie (310) selon l'une quelconque des revendications 1 à 7, dans laquelle la valve (20) comprend une bordure externe (102) et une rainure (104) prévue à l'intérieur de la bordure extérieure (102).

9. Batterie (310) selon l'une quelconque des revendications 1 à 8, dans laquelle l'aire d'ouverture maximale possible selon laquelle la valve (20) est configurée pour s'ouvrir est égale ou inférieure à l'aire de l'ouverture (56) dans la région intermédiaire (68) de l'élément isolant (18).

10. Batterie (310) selon l'une quelconque des revendications 1 à 9, dans laquelle
l'ouverture (326) du boîtier externe (312) a une forme essentiellement rectangulaire, et
lorsque la distance entre les côtés longs de l'ouverture (326) du boîtier externe (312) est définie par T12, et la distance entre les côtés courts de l'ouverture (326) du boîtier externe (312) est définie par W12, la relation 7 ≤ W12/T12 ≤ 13 est satisfaite, et
la capacité de batterie est de 7 Ah à 15 Ah.

11. Batterie (310) selon l'une quelconque des revendications 1 à 10, dans laquelle
l'ouverture (326) du boîtier externe (312) a une forme essentiellement rectangulaire,
chaque groupe de la paire de groupes de protubérances (66a, 66b) comprenant une pluralité de bords en regard d'un côté long de l'ouverture (326) du boîtier externe (312), et
lorsque la distance entre les côtés longs de l'ouverture (326) du boîtier externe (312) est définie par T12 et la largeur entre la pluralité de bords de la paire de groupes de protubérances (66a, 66b) parallèle à la distance T12 entre les côtés longs est définie par Wα, la paire de groupes de protubérances (66a, 66b) de l'élément isolant (18) satisfait à la relation 0,02 ≤ Wα/T12 ≤ 0,04.

12. Batterie (310) selon l'une quelconque des revendications 1 à 11, dans laquelle
l'ouverture (326) du boîtier externe (312) a une forme essentiellement rectangulaire, et
lorsque la distance entre les côtés longs de l'ouverture (326) du boîtier externe (312) est définie par T12 et l'épaisseur de la partie de jambe (92b, 94b) du conducteur (16a, 16b) parallèle à la distance T12 entre les côtés longs est définie par t, la relation 0,02 ≤ t/T12 ≤ 0,04 est satisfaite.

13. Bloc batterie (510) comprenant :
une pluralité de batteries (310) selon l'une quelconque des revendications 1 à 12,
qui sont connectées selon une combinaison de connexions en série et de connexions en parallèle ;
un circuit protecteur (548) ; et
une borne (550) pour alimenter un dispositif externe.
